# EUROPEAN PATENT APPLICATION

(11) **EP 4 694 481 A1**
(43) Date of publication of application: **11.02.2026**
(21) Application number: 24791985.5
(22) Date of filing: 16.04.2024
(51) Int. Cl.: H04W 72/21

(54) **COMMUNICATION METHOD AND DEVICE**

(30) Priority: 18.04.2023 CN 202310439911; 11.08.2023 CN 202311019473
(71) Applicant: Huawei Technologies Co., Ltd., Shenzhen, Guangdong 518129 (CN)
(72) Inventor: YANG, Mao, Xi'an, Shaanxi 710072 (CN); YAN, Zhongjiang, Xi'an, Shaanxi 710072 (CN); LI, Yunbo, Shenzhen, Guangdong 518129 (CN); HUANG, Guogang, Shenzhen, Guangdong 518129 (CN)
(74) Representative: Körber, Martin Hans
(86) International application number: PCT/CN2024/087967
(87) International publication number: WO 2024/217400

(57) **Abstract**

A communication method and apparatus are provided, are applied to the field of communication technologies, and may be applied to a wireless local area network system based on 802.11 series protocols such as a next-generation Wi-Fi protocol of the IEEE 802.11ax, for example, 802.11be, Wi-Fi 7, or EHT, and a next-generation protocol of the 802.11be, Wi-Fi 8, UHR, or Wi-Fi AI, and may be further applied to a UWB-supported WPAN system, a sensing system, and the like. The method includes: A first communication apparatus generates a first communication frame, and transmits the first communication frame; and correspondingly, a second communication apparatus receives the first communication frame, and parses the first communication frame. The first communication frame includes duration information and first NSS information, and the first NSS information indicates a maximum number of receive spatial streams of the first communication apparatus within a target time. According to the method, utilization of radio frequency resources is effectively improved.

## Description

This application claims priorities to Chinese Patent Application No. 202310439911.3, filed with the China National Intellectual Property Administration on April 18, 2023 and entitled "COMMUNICATION METHOD AND APPARATUS", and to Chinese Patent Application No. 202311019473.1, filed with the China National Intellectual Property Administration on August 11, 2023 and entitled "COMMUNICATION METHOD AND APPARATUS", both of which are incorporated herein by reference in their entireties.

### TECHNICAL FIELD

This application relates to the field of communication technologies, and in particular, to a communication method and apparatus.

### BACKGROUND

One of continuous objectives of development and evolution of a wireless local area network (wireless local area network, WLAN) is to continuously improve throughput. Protocols for a WLAN system are mainly discussed in the Institute of Electrical and Electronics Engineers (institute of electrical and electronics engineers, IEEE) 802.11 standard group. In a previous standard like 802.11a/b/g/n/ac/ax, the throughput has been continuously improved. The IEEE 802.11be standard is referred to as extremely high throughput (extremely high throughput, EHT), and significantly improving a peak throughput is a most important technical objective of the IEEE 802.11be standard. To achieve the technical objective of the extremely high throughput, the IEEE 802.11be standard uses multi-link (multi-link, ML) as one of key technologies. A core idea of the multi-link is that a WLAN device that supports IEEE 802.11 standards has a multi-band (multi-band) transmitting and receiving capability, so that a larger bandwidth can be used for data transmission, thereby significantly improving the throughput.

To further improve the throughput, research on a next generation like ultra high reliability (ultra high reliability, UHR) is proposed. During the research on the UHR, access point (access point, AP) coordination is a potential direction. For example, two APs may coordinate with each other to set some time periods to be specially used for a basic service set (basic service set, BSS) to which one AP belongs, and a BSS to which the other AP belongs does not initiate contention within these time periods.

Therefore, how to improve utilization of resources is a current research direction.

### SUMMARY

Embodiments of this application provide a communication method and apparatus, to effectively improve utilization of radio frequency resources.

According to a first aspect, an embodiment of this application provides a communication method. The method is applied to a first communication apparatus. The method includes:
generating a first communication frame, where the first communication frame includes duration information and first number of spatial streams (number of spatial streams, NSS) information, the duration information indicates duration of a target time, and the first NSS information indicates a maximum number of receive spatial streams of the first communication apparatus within the target time; and transmitting the first communication frame.

In this embodiment of this application, when an idle radio frequency resource (or a radio frequency resource is in a limited state) appears on one or more links in the first communication apparatus, the first communication apparatus may schedule the radio frequency resource to another link for use. That is, the first communication apparatus may notify, by using the first communication frame, a second communication apparatus of the maximum number of receive spatial streams and/or a maximum number of transmit space-time streams of the first communication apparatus within the target time. In this way, utilization of radio frequency resources is effectively improved.

With reference to the first aspect, in a possible implementation, the method further includes:
receiving a second communication frame, where the second communication frame includes third NSS information and/or third number of space-time streams (number of space-time streams, NSTS) information, the third NSS information indicates a maximum number of receive spatial streams of the second communication apparatus within the target time, and the third NSTS information indicates a maximum number of transmit space-time streams of the second communication apparatus within the target time.

In this embodiment of this application, for example, in a scenario of multi-access point (access point, AP) coordination through time division multiple access (time division multiple access, TDMA), a contention time period of an AP in a same basic service set (basic service set, BSS) may be the same as a contention time period of a non-access point station (station, STA) (namely, a non-AP STA), and a silent period of the AP in the same BSS may be the same as a silent period of the non-AP STA. In this way, the second communication apparatus feeds back the second communication frame, and the second communication frame may not include time-related information. This effectively simplifies the second communication frame, and reduces maintenance complexity of the AP (for example, target times and intervals maintained on an AP side are the same), thereby reducing signaling overheads of the second communication frame.

According to a second aspect, an embodiment of this application provides a communication method. The method is applied to a second communication apparatus. The method includes:
receiving a first communication frame, where the first communication frame includes duration information and first number of spatial streams NSS information, the duration information indicates duration of a target time, and the first NSS information indicates a maximum number of receive spatial streams of a first communication apparatus within the target time; and parsing the first communication frame.

With reference to the second aspect, in a possible implementation, the method includes:
transmitting a second communication frame, where the second communication frame includes third NSS information and/or third NSTS information, the third NSS information indicates a maximum number of receive spatial streams of the second communication apparatus within the target time, and the third NSTS information indicates a maximum number of transmit space-time streams of the second communication apparatus within the target time.

With reference to the first aspect or the second aspect, in a possible implementation, the first communication frame further includes interval information, and the interval information indicates an interval between two adjacent target times in at least two target times.

With reference to the first aspect or the second aspect, in a possible implementation, the first communication frame further includes at least one of the following: information indicating a start time or information indicating total persistence.

With reference to the first aspect or the second aspect, in a possible implementation, the first communication frame further includes indication information of a first link, and the first link corresponds to the first NSS information.

With reference to the first aspect or the second aspect, in a possible implementation, the first communication frame further includes indication information of a second link and second NSS information corresponding to the second link, and the second NSS information indicates a maximum number of receive spatial streams on the second link in the first communication apparatus within the target time.

With reference to the first aspect or the second aspect, in a possible implementation, the first communication frame further includes a procedure (procedure or flow) identifier, and the procedure identifier corresponds to the duration information and the first NSS information.

With reference to the first aspect or the second aspect, in a possible implementation, when the first communication apparatus is a non-access point station non-AP STA, the first communication frame further includes first number of space-time streams NSTS information, and the first NSTS information indicates a maximum number of transmit space-time streams of the non-AP STA within the target time.

With reference to the first aspect or the second aspect, in a possible implementation, the first communication frame further includes indication information of a second link and second NSTS information corresponding to the second link, and the second NSTS information indicates a maximum number of transmit space-time streams on the second link in the first communication apparatus within the target time.

With reference to the first aspect or the second aspect, in a possible implementation, the second communication frame further includes a procedure identifier.

With reference to the first aspect or the second aspect, in a possible implementation, the maximum number of receive spatial streams indicated by the first NSS information is greater than a maximum number of receive spatial streams indicated by an extremely high throughput EHT capability element, or is greater than a maximum number of receive spatial streams indicated by an ultra high reliability (ultra high reliability, UHR) capability element.

With reference to the first aspect or the second aspect, in a possible implementation, the duration information and the first NSS information are included in a target wake time (target wake time, TWT) element in the first communication frame.

With reference to the first aspect or the second aspect, in a possible implementation, when the first communication apparatus is an access point AP, the communication frame is any one of the following: a protected ultra high reliability UHR action frame, a beacon frame, and an association response frame; or
when the first communication apparatus is a non-access point station non-AP STA, the first communication frame is any one of the following: a protected ultra high reliability UHR action frame, an association request frame, and a target wake time TWT request frame.

According to a third aspect, an embodiment of this application provides a communication method. The method includes:
generating a communication frame, where the communication frame includes duration information, indication information of a first link, indication information of a second link, and number of spatial streams NSS information, the NSS information indicates a maximum number of receive spatial streams on the first link within a first time and a maximum number of receive spatial streams on the second link within a second time, duration of the first time is the same as duration of the second time, a start time of the second time is different from a start time of the first time, and the duration information indicates the duration of the first time or the duration of the second time; and transmitting the communication frame.

In this embodiment of this application, the first communication apparatus can indicate, by using one communication frame, times and NSS information that correspond to a plurality of links. This improves utilization of radio frequency resources, and effectively reduces signaling overheads, thereby reducing maintenance complexity.

According to a fourth aspect, an embodiment of this application provides a communication method. The method includes:
receiving a communication frame, where the communication frame includes duration information, indication information of a first link, indication information of a second link, and number of spatial streams NSS information, the NSS information indicates a maximum number of receive spatial streams on the first link within a first time and a maximum number of receive spatial streams on the second link within a second time, duration of the first time is the same as duration of the second time, a start time of the second time is different from a start time of the first time, and the duration information indicates the duration of the first time or the duration of the second time; and parsing the communication frame.

With reference to the third aspect or the fourth aspect, in a possible implementation, the communication frame further includes information indicating a start time, and the information indicating the start time indicates the start time of the first time.

With reference to the third aspect or the fourth aspect, in a possible implementation, a start time of the second time is equal to an end time of the first time, or an interval between a start time of the second time and an end time of the first time is an integer multiple of the duration indicated by the duration information.

With reference to the third aspect or the fourth aspect, in a possible implementation, the communication frame further includes information indicating a switching time, the information indicating the switching time indicates the switching time, and the switching time is a time at which the first communication apparatus performs radio frequency switching within the first time or the second time.

With reference to the third aspect or the fourth aspect, in a possible implementation, the indication information of the first link includes identification information of the first link, or a value of a bit corresponding to the first link in a link identifier bitmap in the communication frame is 1.

With reference to the third aspect or the fourth aspect, in a possible implementation, the first time and the second time are included in a first periodicity, and duration of the first periodicity is equal to M times the duration indicated by the duration information, where M is greater than or equal to a number of links indicated in the communication frame, or M is greater than or equal to a number of bits whose values are 1 in the link identifier bitmap in the communication frame.

With reference to the third aspect or the fourth aspect, in a possible implementation, when the first communication apparatus is a non-access point station non-AP STA, the communication frame further includes number of space-time streams NSTS information, and the NSTS information indicates a maximum number of transmit space-time streams on the first link within the first time and a maximum number of transmit space-time streams on the second link within the second time.

According to a fifth aspect, an embodiment of this application provides a communication method. The method is applied to a first communication apparatus. The method includes:
generating a first communication frame, where the first communication frame includes duration information and a supported modulation and coding scheme MCS and number of spatial streams NSS set field, the duration information indicates duration of a target time, and the supported MCS and NSS set field indicates a maximum receive NSS and/or a maximum transmit NSS that correspond/corresponds to an MCS within the target time; and transmitting the first communication frame.

According to a sixth aspect, an embodiment of this application provides a communication method. The method is applied to a second communication apparatus. The method includes:
receiving a first communication frame, where the first communication frame includes duration information and a supported modulation and coding scheme MCS and number of spatial streams NSS set field, the duration information indicates duration of a target time, and the supported MCS and NSS set field indicates a maximum receive NSS and/or a maximum transmit NSS that correspond/corresponds to an MCS within the target time; and parsing the first communication frame.

With reference to the fifth aspect or the sixth aspect, in a possible implementation, the supported MCS and NSS set field includes one or more MCS map fields, and a number of the MCS map fields corresponds to a bandwidth supported by the first communication apparatus.

With reference to the fifth aspect or the sixth aspect, in a possible implementation, the MCS map field indicates a maximum number of receive spatial streams and/or a maximum number of transmit spatial streams that correspond/corresponds to different MCSs within the target time period.

With reference to the fifth aspect or the sixth aspect, in a possible implementation, the MCS map field includes at least one of the following:
a maximum number of receive spatial streams that supports MCSs 0 to 9, a maximum number of transmit spatial streams that supports the MCSs 0 to 9, a maximum number of receive spatial streams that supports MCSs 10 and 11, a maximum number of transmit spatial streams that supports the MCSs 10 and 11, a maximum number of receive spatial streams that supports MCSs 12 and 13, or a maximum number of transmit spatial streams that supports the MCSs 12 and 13.

With reference to the fifth aspect or the sixth aspect, in a possible implementation, the first communication frame further includes an MCS map count field, and the MCS map count field indicates the number of MCS mapping fields.

With reference to the fifth aspect or the sixth aspect, in a possible implementation, the first communication frame further includes interval information, and the interval information indicates an interval between start times of two adjacent target times in at least two target times.

With reference to the fifth aspect or the sixth aspect, in a possible implementation, the first communication frame further includes at least one of the following: information indicating a start time or information indicating total persistence.

With reference to the fifth aspect or the sixth aspect, in a possible implementation, the first communication frame further includes indication information of a first link, and the first link corresponds to a supported MCS and NSS set field.

With reference to the fifth aspect or the sixth aspect, in a possible implementation, the first communication frame further includes indication information of a second link and a supported MCS and NSS set field corresponding to the second link, and the supported MCS and NSS set field corresponding to the second link indicates a maximum receive NSS and/or a maximum transmit NSS on the second link in the first communication apparatus within the target time.

With reference to the fifth aspect or the sixth aspect, in a possible implementation, the first communication frame further includes a procedure identifier, and the procedure identifier corresponds to the duration information and the supported MCS and NSS set field.

With reference to the fifth aspect, in a possible implementation, the method further includes:
receiving a second communication frame, where the second communication frame includes a supported MCS and NSS set field, and the supported MCS and NSS set field indicates a maximum receive NSS and/or a maximum transmit NSS of a second communication apparatus within the target time.

With reference to the sixth aspect, in a possible implementation, the method further includes:
transmitting a second communication frame, where the second communication frame includes a supported MCS and NSS set field, and the supported MCS and NSS set field indicates a maximum receive NSS and/or a maximum transmit NSS of the second communication apparatus within the target time.

With reference to the fifth aspect or the sixth aspect, in a possible implementation, the second communication frame further includes a procedure identifier.

With reference to the fifth aspect or the sixth aspect, in a possible implementation, the maximum number of receive spatial streams indicated by the first field is greater than a maximum number of receive spatial streams indicated by an extremely high throughput EHT capability element, or is greater than a maximum number of receive spatial streams indicated by an ultra high reliability UHR capability element.

With reference to the fifth aspect or the sixth aspect, in a possible implementation, the duration information and the supported MCS and NSS set field are included in a target wake time TWT element in the first communication frame.

With reference to the fifth aspect or the sixth aspect, in a possible implementation, when the first communication apparatus is an access point AP, the communication frame is any one of the following: a protected ultra high reliability UHR action frame, a beacon frame, and an association response frame; or
when the first communication apparatus is a non-access point station non-AP STA, the first communication frame is any one of the following: a protected ultra high reliability UHR action frame, an association request frame, and a target wake time TWT request frame.

According to a seventh aspect, an embodiment of this application provides a communication method. The method is applied to a first communication apparatus. The method includes:
generating a communication frame, where the communication frame includes duration information, indication information of a first link, indication information of a second link, and a supported MCS and NSS set field, the supported MCS and NSS set field indicates a maximum number of receive spatial streams on the first link within a first time and a maximum number of receive spatial streams on the second link within a second time, duration of the first time is the same as duration of the second time, a start time of the second time is different from a start time of the first time, and the duration information indicates the duration of the first time or the duration of the second time; and transmitting the communication frame.

In this embodiment of this application, the first communication apparatus can indicate, by using one communication frame, times and NSS information that correspond to a plurality of links. This improves utilization of radio frequency resources, and effectively reduces signaling overheads, thereby reducing maintenance complexity.

According to an eighth aspect, an embodiment of this application provides a communication method. The method is applied to a second communication apparatus. The method includes:
receiving a communication frame, where the communication frame includes duration information, indication information of a first link, indication information of a second link, and a supported MCS and NSS set field, the supported MCS and NSS set field indicates a maximum number of receive spatial streams on the first link within a first time and a maximum number of receive spatial streams on the second link within a second time, duration of the first time is the same as duration of the second time, a start time of the second time is different from a start time of the first time, and the duration information indicates the duration of the first time or the duration of the second time; and parsing the communication frame.

With reference to the seventh aspect or the eighth aspect, in a possible implementation, the communication frame further includes information indicating a start time, and the information indicating the start time indicates the start time of the first time.

With reference to the seventh aspect or the eighth aspect, in a possible implementation, a start time of the second time is equal to an end time of the first time, or an interval between a start time of the second time and an end time of the first time is an integer multiple of the duration indicated by the duration information.

With reference to the seventh aspect or the eighth aspect, in a possible implementation, the communication frame further includes information indicating a switching time, the information indicating the switching time indicates the switching time, and the switching time is a time at which the first communication apparatus performs radio frequency switching within the first time or the second time.

With reference to the seventh aspect or the eighth aspect, in a possible implementation, the indication information of the first link includes identification information of the first link, or a value of a bit corresponding to the first link in a link identifier bitmap in the communication frame is 1.

With reference to the seventh aspect or the eighth aspect, in a possible implementation, the first time and the second time are included in a first periodicity, and duration of the first periodicity is equal to M times the duration indicated by the duration information, where M is greater than or equal to a number of links indicated in the communication frame, or M is greater than or equal to a number of bits whose values are 1 in the link identifier bitmap in the communication frame.

With reference to the seventh aspect or the eighth aspect, in a possible implementation, when the first communication apparatus is a non-access point station non-AP STA, the supported MCS and NSS set field further indicates a maximum number of transmit space-time streams on the first link within the first time and a maximum number of transmit space-time streams on the second link within the second time.

According to a ninth aspect, an embodiment of this application provides a communication apparatus, configured to perform the method according to any one of the first aspect, the second aspect, the third aspect, the fourth aspect, the fifth aspect, the sixth aspect, the seventh aspect, and the eighth aspect, or the possible implementations of the first aspect, the second aspect, the third aspect, the fourth aspect, the fifth aspect, the sixth aspect, the seventh aspect, and the eighth aspect. The communication apparatus includes a unit that performs the method according to any one of the first aspect, the second aspect, the third aspect, the fourth aspect, the fifth aspect, the sixth aspect, the seventh aspect, and the eighth aspect, or the possible implementations of the first aspect, the second aspect, the third aspect, the fourth aspect, the fifth aspect, the sixth aspect, the seventh aspect, and the eighth aspect.

For example, the communication apparatus may be a WLAN device or a chip, and the chip may be used in the WLAN device or the like.

According to a tenth aspect, an embodiment of this application provides a communication apparatus. The communication apparatus includes a processor, configured to perform the method according to any one of the first aspect, the second aspect, the third aspect, the fourth aspect, the fifth aspect, the sixth aspect, the seventh aspect, and the eighth aspect, or the possible implementations of the first aspect, the second aspect, the third aspect, the fourth aspect, the fifth aspect, the sixth aspect, the seventh aspect, and the eighth aspect. Alternatively, the processor is configured to execute a program stored in a memory. When the program is executed, the method according to any one of the first aspect, the second aspect, the third aspect, the fourth aspect, the fifth aspect, the sixth aspect, the seventh aspect, and the eighth aspect, or the possible implementations of the first aspect, the second aspect, the third aspect, the fourth aspect, the fifth aspect, the sixth aspect, the seventh aspect, and the eighth aspect is performed.

In a possible implementation, the memory is located outside the communication apparatus.

In a possible implementation, the memory is located inside the communication apparatus.

In this embodiment of this application, the processor and the memory may alternatively be integrated into one device. In other words, the processor and the memory may alternatively be integrated together. For example, the communication apparatus may be a chip.

In a possible implementation, the communication apparatus further includes a transceiver. The transceiver is configured to receive a signal or transmit a signal.

According to an eleventh aspect, an embodiment of this application provides a communication apparatus. The communication apparatus includes a logic circuit and an interface, and the logic circuit is coupled to the interface. The interface is configured to input and/or output information, and the logic circuit is configured to perform the method according to any one of the first aspect, the second aspect, the third aspect, the fourth aspect, the fifth aspect, the sixth aspect, the seventh aspect, and the eighth aspect, or the possible implementations of the first aspect, the second aspect, the third aspect, the fourth aspect, the fifth aspect, the sixth aspect, the seventh aspect, and the eighth aspect.

According to a twelfth aspect, an embodiment of this application provides a computer-readable storage medium. The computer-readable storage medium is configured to store a computer program. When the computer program is run on a computer, the method according to any one of the first aspect, the second aspect, the third aspect, the fourth aspect, the fifth aspect, the sixth aspect, the seventh aspect, and the eighth aspect, or the possible implementations of the first aspect, the second aspect, the third aspect, the fourth aspect, the fifth aspect, the sixth aspect, the seventh aspect, and the eighth aspect is performed.

According to a thirteenth aspect, an embodiment of this application provides a computer program product. The computer program product includes a computer program or computer code. When the computer program or the computer code is run on a computer, the method according to any one of the first aspect, the second aspect, the third aspect, the fourth aspect, the fifth aspect, the sixth aspect, the seventh aspect, and the eighth aspect, or the possible implementations of the first aspect, the second aspect, the third aspect, the fourth aspect, the fifth aspect, the sixth aspect, the seventh aspect, and the eighth aspect is performed.

According to a fourteenth aspect, an embodiment of this application provides a computer program. When the computer program is run on a computer, the method according to any one of the first aspect, the second aspect, the third aspect, the fourth aspect, the fifth aspect, the sixth aspect, the seventh aspect, and the eighth aspect, or the possible implementations of the first aspect, the second aspect, the third aspect, the fourth aspect, the fifth aspect, the sixth aspect, the seventh aspect, and the eighth aspect is performed.

According to a fifteenth aspect, an embodiment of this application provides a communication system. The communication system includes a first communication apparatus and a second communication apparatus. The first communication apparatus is configured to perform the method according to any one of the first aspect, the third aspect, the fifth aspect, and the seventh aspect, or the possible implementations of the first aspect, the third aspect, the fifth aspect, and the seventh aspect, and the second communication apparatus is configured to perform the method according to any one of the second aspect, the fourth aspect, the sixth aspect, and the eighth aspect, or the possible implementations of the second aspect, the fourth aspect, the sixth aspect, and the eighth aspect.

### BRIEF DESCRIPTION OF DRAWINGS

FIG. 1 is a diagram of an architecture of a communication system according to an embodiment of this application;
FIG. 2a is a diagram of a connection manner between a multi-link AP and a multi-link STA according to an embodiment of this application;
FIG. 2b is a diagram of a connection manner between a multi-link AP and a multi-link STA according to an embodiment of this application;
FIG. 3a is a diagram of communication between multi-link devices according to an embodiment of this application;
FIG. 3b is a diagram of communication between multi-link devices according to an embodiment of this application;
FIG. 4 is a diagram of TDMA-based coordination between AP MLDs according to an embodiment of this application;
FIG. 5 is a schematic flowchart of a communication method according to an embodiment of this application;
FIG. 6a to FIG. 6c each are a diagram of target time according to an embodiment of this application;
FIG. 7a to FIG. 7e each are a diagram of a format of a first communication frame according to an embodiment of this application;
FIG. 8a to FIG. 8d each are a diagram of a format of a first communication frame according to an embodiment of this application;
FIG. 9a to FIG. 9d each are a diagram of a format of a first communication frame according to an embodiment of this application;
FIG. 10a to FIG. 10d each are a diagram of a format of a second communication frame according to an embodiment of this application;
FIG. 11 is a schematic flowchart of a communication method according to an embodiment of this application;
FIG. 12a to FIG. 12c each are a diagram of first time and second time according to an embodiment of this application;
FIG. 12d is a diagram of target time according to an embodiment of this application;
FIG. 13a to FIG. 13d each are a diagram of a format of a communication frame according to an embodiment of this application;
FIG. 14 to FIG. 16 each are a diagram of a structure of a communication apparatus according to an embodiment of this application;
FIG. 17a is a diagram of a format of a modulation and coding scheme (modulation and coding Scheme, MCS) map count control field according to an embodiment of this application;
FIG. 17b is a diagram of a format of a supported MCS and NSS set field according to an embodiment of this application;
FIG. 17c is a diagram of a format of an MCS map field according to an embodiment of this application;
FIG. 18a to FIG. 18e each are a diagram of a format of a first communication frame according to an embodiment of this application;
FIG. 19a to FIG. 19d each are a diagram of a format of a first communication frame according to an embodiment of this application;
FIG. 20a to FIG. 20d each are a diagram of a format of a first communication frame according to an embodiment of this application;
FIG. 21a to FIG. 21d each are a diagram of a format of a second communication frame according to an embodiment of this application; and
FIG. 22a to FIG. 22d each are a diagram of a format of a communication frame according to an embodiment of this application.

### DESCRIPTION OF EMBODIMENTS

For ease of understanding technical solutions this application, the following further describes this application with reference to accompanying drawings.

The terms "first", "second", and the like in the specification, claims, and accompanying drawings of this application are used to distinguish between different objects, but are not used to describe a specific order. In addition, terms such as "include" and "have" and any other variants thereof are intended to cover a non-exclusive inclusion. For example, processes, methods, systems, products, devices, or the like that include a series of steps or units are not limited to listed steps or units, but optionally further include steps or units that are not listed, or optionally further include other steps or units inherent to these processes, methods, products, devices, or the like.

The term "Embodiment" in this specification means that a specific feature, structure, or characteristic described with reference to the embodiment may be included in at least one embodiment of this application. The phrase shown in various positions in the specification may not necessarily refer to a same embodiment, and is not an independent or optional embodiment exclusive from another embodiment. It may be understood explicitly and implicitly by a person skilled in the art that embodiments described in the specification may be combined with another embodiment.

In this application, "at least one (item)" means one or more, "a plurality of" means two or more, "at least two (items)" means two, three, or more, and "and/or" is used to describe an association between associated objects, and indicates that three relationships may exist. For example, "A and/or B" may indicate the following three cases: Only A exists, only B exists, and both A and B exist, where A and B may be singular or plural. "Or" indicates that two relationships may exist, for example, only A exists and only B exists. When A and B are not mutually exclusive, it may indicate that three relationships exist, for example, only A exists, only B exists, and both A and B exist. The character "/" usually indicates an "or" relationship between the associated objects. "At least one of the following items (pieces)" or a similar expression thereof means any combination of these items. For example, at least one of a, b, or c may represent: a, b, c, "a and b", "a and c", "b and c", or "a and b and c".

The technical solutions provided in embodiments of this application may be applied to a WLAN system, for example, Wi-Fi. For example, the methods provided in embodiments of this application are applicable to IEEE 802.11 series protocols such as the 802.11a/b/g protocol, the 802.11n protocol, the 802.11ac protocol, the 802.11ax protocol, the 802.11be protocol, or a next-generation protocol. Examples are not enumerated. The technical solutions provided in embodiments of this application may be further applied to a UWB technology-based wireless personal area network (wireless personal area network, WPAN). For example, the methods provided in embodiments of this application are applicable to IEEE 802.15 series protocols, such as the 802.15.4a protocol, the 802.15.4z protocol, the 802.15.4ab protocol, or a future generation UWB WPAN protocol. Examples are not enumerated. The technical solutions provided in embodiments of this application may be further applied to the following communication systems, such as an internet of things (internet of things, IoT) system, a vehicle-to-everything (vehicle-to-X, V2X) system, and a narrowband internet of things (narrowband internet of things, NB-IoT) system; or may be applied to a device in vehicle-to-everything, an internet of things node, a sensor, and the like in the internet of things (IoT, internet of things), a smart camera, a smart remote control, and a smart water/electricity meter in a smart home, a sensor in a smart city, and the like; or may be further applied to a long term evolution (long term evolution, LTE) system, a 5th generation (5th generation, 5G) communication system, a new communication system emerging in future communication development, and the like.

The WLAN system can provide high-rate and low-latency transmission. With continuous evolution of WLAN application scenarios, the WLAN system is to be applied to more scenarios or industries, such as the internet of things industry, the vehicle-to-everything industry, the banking industry, enterprise offices, stadiums and exhibition halls, concert halls, hotel rooms, dormitories, hospital wards, classrooms, shopping malls and supermarkets, squares, streets, production workshops, and warehouses. Certainly, a device (for example, an access point or a station) that supports WLAN communication or sensing may be a sensor node (for example, a smart water meter, a smart electricity meter, or a smart air detection node) in a smart city, a smart device (for example, a smart camera, a projector, a display, a television, a speaker, a refrigerator, or a washing machine) in a smart home, a node in the internet of things, an entertainment terminal (for example, augmented reality (augmented reality, AR), virtual reality (virtual reality, VR), or another wearable device), a smart device (for example, a printer, a projector, a loudspeaker, or a speaker) in a smart office, a vehicle-to-everything device in the vehicle-to-everything, an infrastructure (for example, a vending machine, a self-service navigation console in a shopping mall or supermarket, a self-service cashier, or a self-service ordering machine) in a daily life scenario, a device in a large sports and music venue, or the like.

Although embodiments of this application mainly use a WLAN as an example, especially a network applied to IEEE 802.11 series standards, for example, a system supporting Wi-Fi 7 that may also be referred to as extremely high throughput (extremely high throughput, EHT), and for another example, a system supporting Wi-Fi 8 that may also be referred to as ultra high reliability (ultra high reliability, UHR) or ultra high reliability and throughput (ultra high reliability and throughput, UHRT). A person skilled in the art easily understands that various aspects in embodiments of this application may be extended to other networks using various standards or protocols, such as Bluetooth (Bluetooth), a high performance radio LAN (high performance radio LAN, HIPERLAN) (a wireless standard similar to the IEEE 802.11 standard, and mainly used in Europe), a wide area network (WAN), or other networks that are known or are to be developed in the future.

A multi-link device (multi-link device, MLD) is a device that simultaneously includes a plurality of stations (such as APs or non-AP STAs) respectively operating on different bands or channels. The multi-link device includes a plurality of affiliated stations. The affiliated stations may be physical stations, or may be logical stations. Each station may operate on one link, one band, one channel, or the like. The affiliated station may be an AP or a non-AP STA. For ease of description, in embodiments of this application, a multi-link device whose affiliated station is an AP may be referred to as a multi-link AP, a multi-link AP device, or an AP multi-link device (AP multi-link device, AP MLD). A multi-link device whose affiliated station is a non-AP STA is referred to as a multi-link STA, a multi-link STA device, or a STA multi-link device (STA multi-link device). Alternatively, a multi-link device whose affiliated station is a non-AP STA is referred to as a multi-link non-AP, a multi-link non-AP device, or a non-AP multi-link device (non-AP multi-link device, non-AP MLD). The multi-link device (which may be a non-AP MLD or an AP MLD herein) is a communication apparatus having a wireless communication function. The communication apparatus may be an entire device, or may be a chip, a processing system, a functional module, or the like installed in an entire device. The device in which the chip, the processing system, or the functional module is installed may implement the methods and functions in embodiments of this application under control of the chip, the processing system, or the functional module.

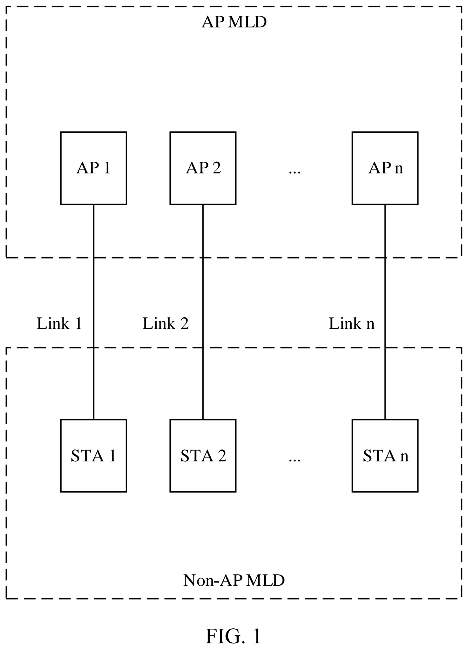

The multi-link device may implement wireless communication according to 802.11 series protocols, for example, comply with EHT, or comply with and be based on the 802.11be, or be compatible with and support the 802.11be, to implement communication with another device. Certainly, the another device may be a multi-link device, or may not be a multi-link device. Before data transmission is performed between a multi-link device and another multi-link device, the multi-link device and the another multi-link device may first negotiate or communicate with each other about a correspondence between a link identifier (link ID) and a link or a station on a link, or an AP multi-link device indicates a correspondence between a link identifier and a link or a station on a link through a broadcast management frame, for example, a beacon frame. Therefore, during data transmission, there is no need to transmit a large amount of signaling information to indicate a link or a station on a link, provided that a link identifier (for example, a link 1, a link 2, a link n, and the like that are shown in FIG. 1) needs to be carried. This reduces signaling overheads and improves transmission efficiency.

FIG. 1 is a diagram of an architecture of a communication system according to an embodiment of this application. As shown in FIG. 1, an AP MLD includes an AP 1, an AP 2, ..., and an AP n, and a non-AP MLD includes a STA 1, a STA 2, ..., and a STA n. Herein, n is a positive integer. The AP MLD and the non-AP MLD may perform parallel communication on a link 1, a link 2, ..., and a link n. The STA 1 in the non-AP MLD establishes an association with the AP 1 in the AP MLD. The STA 2 in the non-AP MLD establishes an association with the AP 2 in the AP MLD. The STA n in the non-AP MLD establishes an association with the AP n in the AP MLD. In this way, one or more STAs in the non-AP MLD and one or more APs in the AP MLD may communicate with each other after establishing an association. For example, the methods provided in embodiments of this application are applicable to but are not limited to single-user uplink/downlink transmission, multi-user uplink/downlink transmission, vehicle-to-everything (vehicle-to-everything, V2X, where X may represent everything), and device-to-device (device-to-device, D2D). For example, the V2X may include vehicle-to-vehicle (vehicle-to-vehicle, V2V), vehicle-to-infrastructure (vehicle-to-infrastructure, V2I), vehicle-to-pedestrian (vehicle-to-pedestrian, V2P) communication, or vehicle-to-network (vehicle-to-network, V2N) communication.

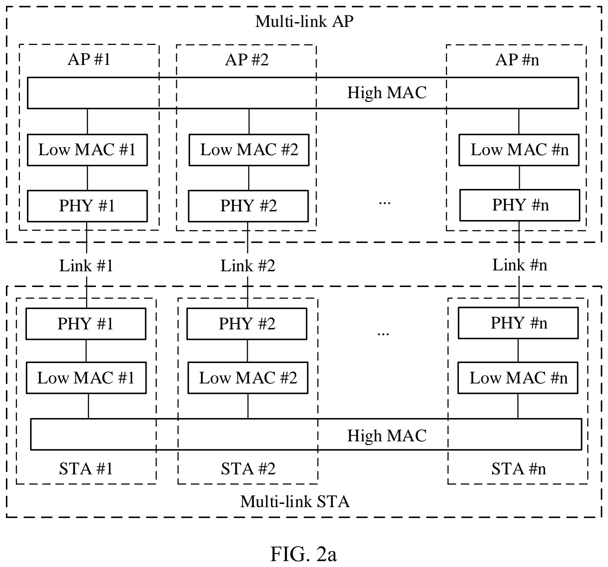

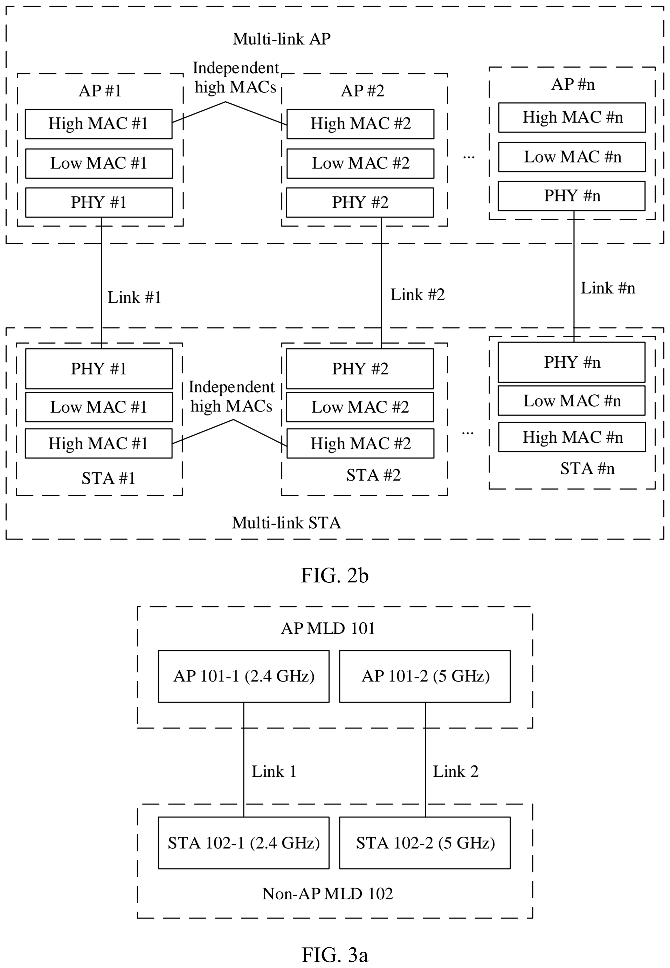

FIG. 2a and FIG. 2b each are a diagram of a connection manner between a multi-link AP and a multi-link STA according to an embodiment of this application. The 802.11 standard focuses on 802.11 physical layer (physical layer, PHY) and medium access control (medium access control, MAC) layer parts in a multi-link device. Therefore, FIG. 2a and FIG. 2b show only examples of PHY and MAC layers.

As shown in FIG. 2a, a multi-link device (for example, a multi-link AP and a multi-link STA) may include physical layers (physical layers, PHYs) (a PHY #1, a PHY #2, and a PHY #n shown in FIG. 2a) and medium access control (medium access control, MAC) layers. The physical layer may be configured to process a physical layer signal, and the MAC layer may be configured to process a MAC layer signal. Further, the MAC layers may be further divided into one high-MAC (high-MAC) layer (a high-MAC shown in FIG. 2a) and a plurality of low-MAC (low-MAC) layers (a low-MAC #1, and a low-MAC #2 to a low-MAC #n shown in FIG. 2a). As shown in FIG. 2a, a plurality of APs included in the multi-link AP are independent of each other at the low-MAC layers and the PHYs, and share the high-MAC layer. A plurality of STAs included in the multi-link STA are independent of each other at the low-MAC layers and the PHYs, and share the high-MAC layer. The high-MAC layer is separately connected to the plurality of low-MAC layers, that is, the high-MAC layer is shared by a plurality of links. As shown in FIG. 2b, a plurality of APs included in the multi-link AP are independent of each other at low MAC layers and PHYs, and are also independent of each other at high MAC layers. A plurality of STAs in the multi-link STA device are independent of each other at low MAC layers and PHYs, and are also independent of each other at high MAC layers. For example, the high-MAC layer mainly completes operations such as allocation, encryption, and decryption of a sequence number (sequence number, SN) and a packet number (packet number, PN) of a MAC service data unit (MAC service data unit, MSDU). For example, the low-MAC layer mainly completes operations such as assembly, channel access, packet transmitting, and reception acknowledgment of a MAC protocol data unit (MAC protocol data unit, MPDU) of a respective link.

In FIG. 2a, a PHY #1 layer, a low-MAC #1 layer, and the high-MAC layer in the multi-link AP may be considered as an AP #1; a PHY #2 layer, a low-MAC #2 layer, and the high-MAC layer may be considered as an AP #2; ...; and a PHY #n layer, a low-MAC #n layer, and the high-MAC layer may be considered as an AP #n. In other words, it may be understood that the multi-link AP includes n AP entities. A similar case exists in the multi-link STA. To be specific, the high-MAC layer in the multi-link STA is also shared by a plurality of links. A PHY #1 layer, a low-MAC #1 layer, and the high-MAC layer are considered as a STA #1; a PHY #2 layer, a low-MAC #2 layer, and the high-MAC layer are considered as a STA #2; ...; and a PHY #n layer, a low-MAC #n layer, and the high-MAC layer are considered as a STA #n. In other words, it may be understood that the multi-link STA includes n STA entities. As shown in FIG. 2a, the PHY #1 in the AP #1 in the multi-link AP and the PHY #1 in the STA #1 in the multi-link STA operate on a same channel, and the AP #1 in the multi-link AP communicates with the STA #1 in the multi-link STA on a link (a link #1 shown in FIG. 2a); the PHY #2 in the AP #2 in the multi-link AP and the PHY #2 in the STA #2 in the multi-link STA operate on another same channel, and the AP #2 in the multi-link AP communicates with the STA #2 in the multi-link STA on a link (a link #2 shown in FIG. 2a); and the PHY #n in the AP #n in the multi-link AP and the PHY #n in the STA #n in the multi-link STA operate on another same channel, and the AP #n in the multi-link AP communicates with the STA #n in the multi-link STA on a link (a link #n shown in FIG. 2a). For descriptions of FIG. 2b, refer to FIG. 2a. Details are not described herein again.

For example, both the high-MAC layer and the low-MAC layer may be implemented by a processor in a chip system of the multi-link device, or may be implemented by different processing modules in a chip system. Examples are not enumerated in embodiments of this application. It may be understood that FIG. 2a and FIG. 2b may be understood as division of the multi-link device into functional modules. The modules shown in FIG. 2a and FIG. 2b may be implemented in a form of hardware, or may be implemented in a form of software functional modules, or the like. The PHY and the MAC layer shown in FIG. 2a and FIG. 2b may be understood as logical function division, and there may be another division manner during actual implementation. Herein, n shown in FIG. 2a and FIG. 2b may be equal to 1, or n is an integer greater than 1, or the like.

For example, the multi-link device in embodiments of this application may be a single-antenna device, or may be a multi-antenna device. For example, the multi-link device may be a device with more than two antennas. A number of antennas included in the multi-link device is not limited in embodiments of this application. In embodiments of this application, the multi-link device may allow services of a same access type to be transmitted on different links, and even allow a same data packet to be transmitted on different links; or may not allow services of a same access type to be transmitted on different links, but allow services of different access types to be transmitted on different links.

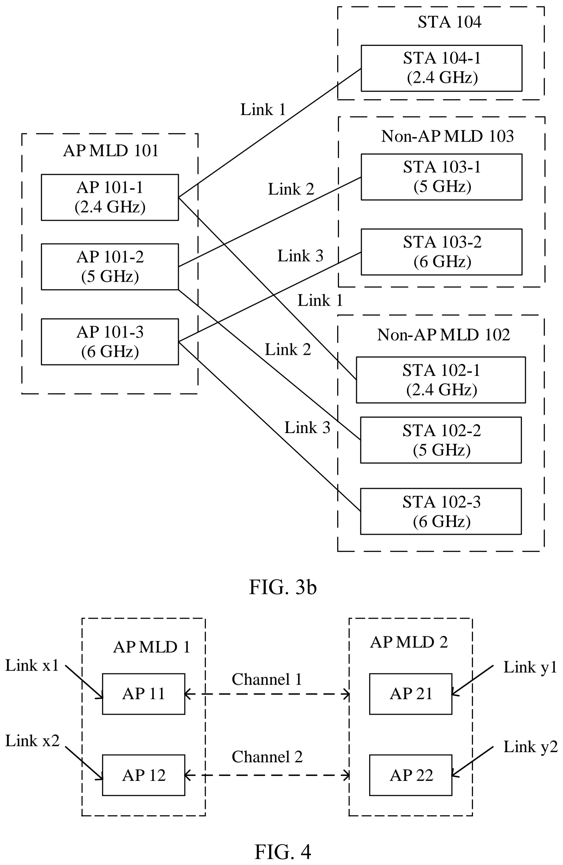

Bands in which the multi-link device operates may include but are not limited to sub-1 GHz, 2.4 GHz, 5 GHz, 6 GHz, and high-band 60 GHz. FIG. 3a and FIG. 3b are two diagrams of communication between a multi-link device and another device on a plurality of links in a wireless local area network.

FIG. 3a shows a scenario in which an AP MLD 101 communicates with a non-AP MLD 102. The AP MLD 101 includes an affiliated AP 101-1 and an affiliated AP 101-2. The non-AP MLD 102 includes an affiliated STA 102-1 and an affiliated STA 102-2. The AP MLD 101 and the non-AP MLD 102 perform parallel communication on a link 1 and a link 2.

For example, FIG. 3b shows a scenario in which an AP MLD 101 communicates with a non-AP MLD 102, a non-AP MLD 103, and a STA 104. The AP MLD 101 includes an affiliated AP 101-1 to an affiliated AP 101-3. The non-AP MLD 102 includes three affiliated STAs: a STA 102-1, a STA 102-2, and a STA 102-3. The non-AP MLD 103 includes two affiliated STAs: a STA 103-1 and a STA 103-2. The STA 104 is a single-link device and includes a STA 104-1. The AP MLD 101 may separately communicate with the non-AP MLD 102 on a link 1, a link 2, and a link 3, communicate with the non-AP MLD 103 on a link 2 and a link 3, and communicate with the STA 104 on a link 1. In an example, the STA 104 operates in the 2.4 GHz band; in the non-AP MLD 103, the STA 103-1 operates in the 5 GHz band, and the STA 103-2 operates in the 6 GHz band; and in the non-AP MLD 102, the STA 102-1 operates in the 2.4 GHz band, the STA 102-2 operates in the 5 GHz band, and the STA 102-3 operates in the 6 GHz band. The AP 101-1 operating in the 2.4 GHz band in the AP MLD 101 may communicate, on the link 1, uplink or downlink data with the STA 104 and the STA 102-1 in the non-AP MLD 102. The AP 101-2 operating in the 5 GHz band in the AP MLD 101 may communicate, on the link 2, uplink or downlink data with the STA 103-1 operating in the 5 GHz band in the non-AP MLD 103, and also communicate, on the link 2, uplink or downlink data with the STA 102-2 operating in the 5 GHz band in the non-AP MLD 102. The AP 101-3 operating in the 6 GHz band in the AP MLD 101 may communicate, on the link 3, uplink or downlink data with the STA 102-3 operating in the 6 GHz band in the non-AP MLD 102, and also communicate, on the link 3, uplink or downlink data with the STA 103-2 in the non-AP MLD.

FIG. 3a shows that the AP MLD supports only two bands. FIG. 3b shows an example in which the AP MLD 101 supports only three bands (2.4 GHz, 5 GHz, and 6 GHz), each band corresponds to one link, and the AP MLD 101 may operate on one or more links in the link 1, the link 2, or the link 3. During actual application, the AP MLD and the non-AP MLD may alternatively support more or fewer bands, that is, the AP MLD and the non-AP MLD may operate on more links or fewer links. This is not limited in embodiments of this application. FIG. 3a and FIG. 3b are merely simple diagrams, and do not constitute any limitation on the protection scope of embodiments of this application.

FIG. 4 is a diagram of time division multiple access (time division multiple access, TDMA)-based coordination between AP MLDs according to an embodiment of this application. For example, an AP MLD 1 includes an AP 11 and an AP 12, and an AP MLD 2 includes an AP 21 and an AP 22. The AP 11 and the AP 21 operate on a channel 1, and the AP 21 and the AP 22 operate on a channel 2. For example, a link ID may be independently allocated by each AP MLD. Therefore, link IDs of two APs on a same channel may be the same or different. In this case, in FIG. 4, link IDs of the AP 11 and the AP 12 are x1 and x2 respectively, and link IDs of the AP 21 and the AP 22 are y1 and y2 respectively.

The AP 11 and the AP 21 can listen to a frame transmitted by each other, and the AP 11 and the AP 21 are mutually overlapping basic service sets (overlapping basic service sets, OBSSs). The AP 11 and the AP 21 may avoid contention between two BSSs through TDMA-based coordination. For example, the AP 21 and an associated station of the AP 21 may initiate contention within a time period 1, and the AP 11 and an associated station of the AP 11 remain silent within the time period 1. The AP 11 and the associated station of the AP 11 may initiate contention within a time period 2, and the AP 21 and the associated station of the AP 21 remain silent within the time period 2.

That is, the AP 11 and the associated station of the AP 11 remain silent within the time period 1, resulting in a waste of radio frequency resources of the AP 11 and the associated station of the AP 11 within the time period 1, and the AP 21 and the associated station of the AP 21 remain silent within the time period 2, resulting in a waste of radio frequency resources of the AP 21 and the associated station of the AP 21 within the time period 2. It may be understood that the TDMA-based coordination shown in FIG. 4 is a coordination manner provided in embodiments of this application. In a specific implementation, two OBSS APs may perform coordination in different forms. For another example, two APs coordinate with each other to set some time periods to be specially used for a BSS to which one AP belongs, and a BSS to which the other AP belongs does not initiate contention within the time periods. This avoids a collision between the two BSSs, thereby improving efficiency and reducing a delay. Alternatively, within a time period agreed to be used by one AP, because the other AP cannot transmit a frame, a radio frequency resource of the AP within the time period is in a limited state (or in a state in which the radio frequency resource cannot be fully utilized).

It may be understood that the foregoing coordination scenario is merely an example. In a specific implementation, there may alternatively be the following scenarios. For example, when load of an AP is less than or equal to a load threshold, utilization of a radio frequency resource of the AP is low, that is, the radio frequency resource of the AP cannot be fully utilized. For another example, for a single-link device, the single-link device may have a plurality of services at the same time, and utilization of radio frequency resources of one or more of the plurality of services may not be fully utilized. Scenarios to which embodiments of this application are applicable are not enumerated.

In view of a waste of radio frequency resources or an underutilized radio frequency resource, embodiments of this application provide a communication method and apparatus, to effectively improve utilization of radio frequency resources. A first communication apparatus or a second communication apparatus in embodiments of this application may be a single-link device or a multi-link device. In an example, at least one of the first communication apparatus and the second communication apparatus may be a Wi-Fi chip. In another example, the first communication apparatus may be an AP or an AP affiliated with an MLD, and the second communication apparatus may be a non-AP STA or a non-AP STA affiliated with the MLD. In still another example, the first communication apparatus may be a non-AP STA or a non-AP STA affiliated with an MLD, and the second communication apparatus may be an AP or an AP affiliated with the MLD. The AP affiliated with the MLD establishes an association with the non-AP MLD affiliated with the MLD. Specific forms or types of the first communication apparatus and the second communication apparatus shown herein are merely examples, and shall not be understood as a limitation on embodiments of this application.

The radio frequency resource shown in embodiments of this application may be understood as at least one of the following: a number of receive spatial streams (number of spatial streams, NSS), a number of receive space-time streams (number of space-time streams, NSTS), a number of transmit spatial streams, or a number of transmit space-time streams. For example, a spatial stream may be understood as one of several streams of bits or modulation symbols that might be transmitted over multiple spatial dimensions that are created by the use of multiple antennas at both ends of a communication link (One of several streams of bits or modulation symbols that might be transmitted over multiple spatial dimensions that are created by the use of multiple antennas at both ends of a communication link.). For example, a space-time stream may be understood as a stream of modulation symbols created by applying a combination of spatial and temporal processing to one or more spatial streams of modulation symbols (Stream of modulation symbols created by applying a combination of spatial and temporal processing to one or more spatial streams of modulation symbols.). Generally, the NSTS is a number of spatial streams obtained after space-time block code (Space-time block code, STBC) is used. Therefore, the NSTS is related to the NSS. In some scenarios, the NSTS and the NSS are interchangeable. For example, when the STBC is not used, the NSS may be equal to the NSTS. For another example, when the STBC needs to be used for all spatial streams, the NSTS may be equal to 2×NSS. For a relationship between the spatial stream and the space-time stream, details are not described in embodiments of this application. For ease of description, a number of receive spatial streams and a number of transmit space-time streams are used as an example below for description, but shall not be understood as a limitation on embodiments of this application.

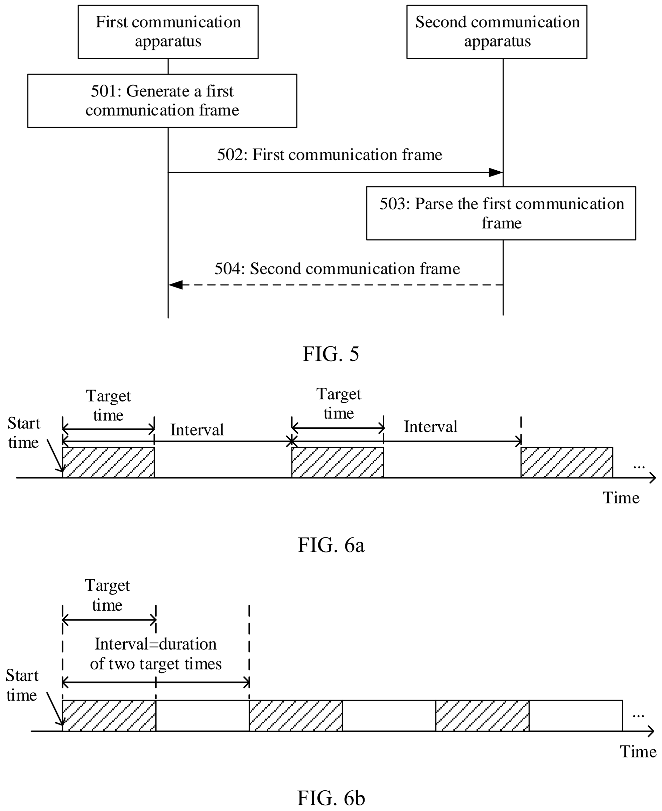

FIG. 5 is a schematic flowchart of a communication method according to an embodiment of this application. For descriptions of a first communication apparatus and a second communication apparatus in the method, refer to the foregoing descriptions. Details are not described herein again. As shown in FIG. 5, the method includes the following steps.

501: The first communication apparatus generates a first communication frame.

The first communication frame may include one or more of the following: first NSS information, duration information, interval information, information indicating a start time, information indicating total persistence, a procedure identifier, and first NSTS information.

The following describes the first NSS information, the duration information, the interval information, the information indicating the start time, the information indicating the total persistence, the procedure identifier, and the first NSTS information in detail.

For example, the first communication frame includes the first NSS information. The first NSS information indicates a maximum number of receive spatial streams of the first communication apparatus within a target time. The first NSS information may be understood as a maximum number of receive spatial streams allowed to be used by the first communication apparatus within the target time. For example, the first communication apparatus may receive a signal within the target time by using a number of spatial streams less than or equal to the maximum number of receive spatial streams. For example, the first NSS information may occupy three bits, four bits, or the like. If a value of the three bits or the four bits is n (n is a decimal value), it may indicate that the first communication apparatus supports a maximum number (n+1) of receive spatial streams within the target time. A number of bits occupied by the first NSS information is not limited in embodiments of this application. A maximum number of receive spatial streams allowed to be used by the first communication apparatus outside the target time is less than the maximum number of receive spatial streams indicated by the first NSS information. For example, the maximum number of receive spatial streams indicated by the first NSS information is greater than a maximum number of receive spatial streams indicated by an EHT capability element, or is greater than a maximum number of receive spatial streams indicated by a UHR capability element. For example, the maximum number of receive spatial streams allowed to be used by the first communication apparatus outside the target time may be determined based on the EHT capability element or the UHR capability element. Certainly, with progress of the standard, there may be more types of capability elements subsequently to indicate the maximum number of receive spatial streams of the first communication apparatus outside the target time, and are not shown one by one herein. Generally, the EHT capability element, the UHR capability element, or the like may indicate information, for example, a supported upper limit of a bandwidth, an NSS, or a modulation and coding scheme (modulation and coding scheme, MCS), or may indicate a feature supported by the first communication apparatus or the second communication apparatus. Specific information in the EHT capability element and the UHR capability element is not limited in embodiments of this application.

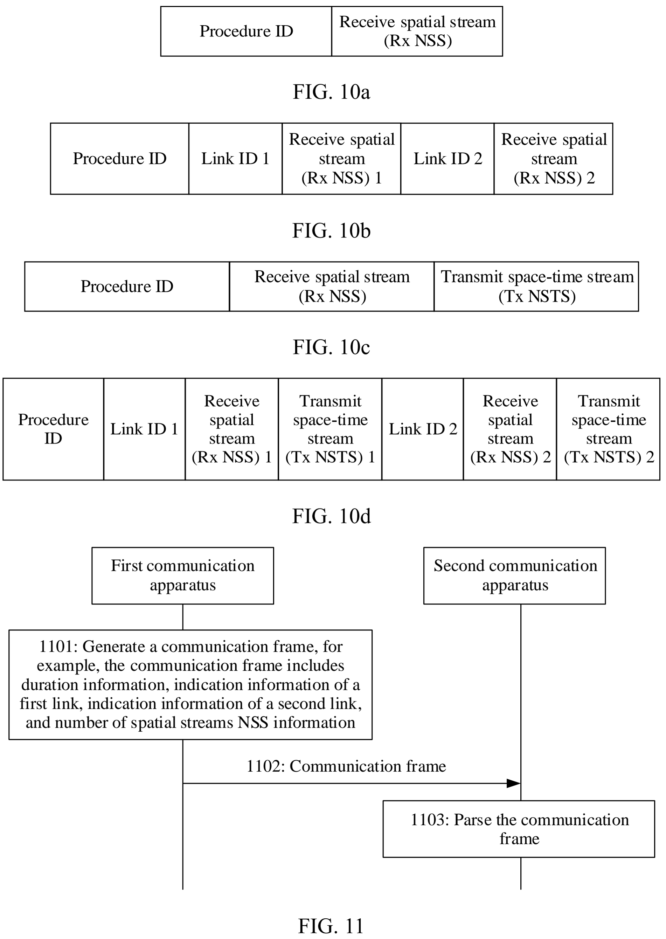

For example, when the first communication frame includes the duration information, duration of the target time may be indicated by the duration information. For example, a measurement unit of the duration indicated by the duration information may include a target beacon transmission time (target beacon transmission time, TBTT), a time unit (time unit, TU), a millisecond (ms), or the like. A specific manner for indicating the duration by the duration information in the first communication frame is not limited in embodiments of this application. When the first communication frame does not include the duration information, duration of the target time may be defined in a protocol, or broadcast by an AP, or indicated by the first communication apparatus to the second communication apparatus by using another communication frame, or the like. For descriptions in which the first communication frame does not include the interval information, the information indicating the start time, or the information indicating the total persistence, refer to the descriptions of the duration information herein. Details are not described below again. The descriptions of the duration information herein are also applicable to the duration information shown in FIG. 11 below. For example, the target time may be the foregoing time period within which a radio frequency resource of an AP is in the limited state, or may be the foregoing time period within which utilization of a radio frequency resource of a service is not fully utilized. Examples are not enumerated herein again.

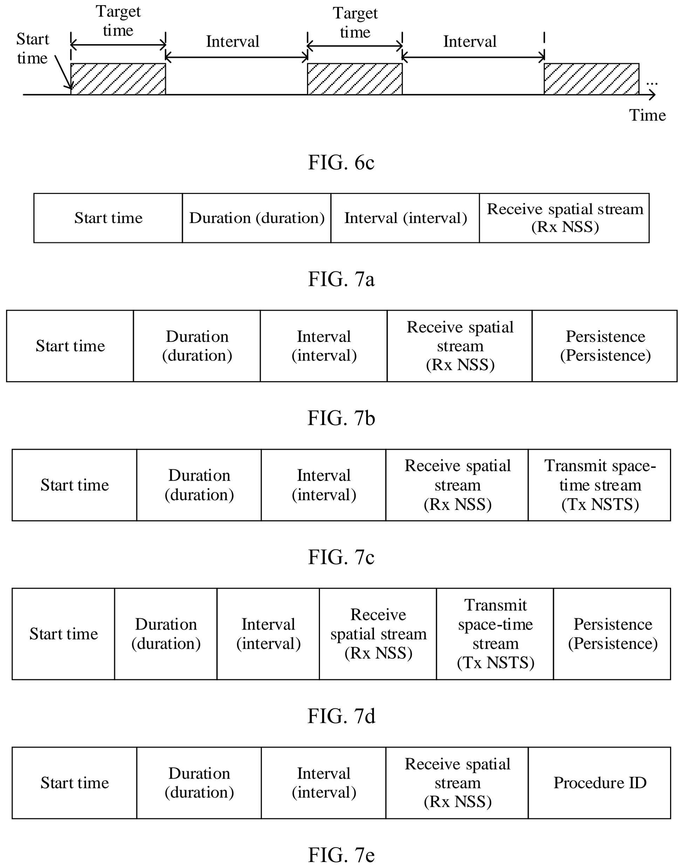

For example, the first communication frame includes the interval information. The interval information indicates an interval between start times of two adjacent target times in at least two target times. As shown in FIG. 6a, the interval may be an interval between start times of two adjacent target times. For example, the interval indicated by the interval information may be an integer multiple of the duration of the target time. As shown in FIG. 6b, the interval may be equal to duration of two target times. The interval equal to the duration of two target times shown herein is merely an example. In a specific implementation, the interval may alternatively be equal to duration of three target times, duration of four target times, or the like. This is not limited in embodiments of this application. When the interval is the integer multiple of the duration of the target time, an interval indication manner may be simplified, and signaling overheads are reduced. For example, a multiple relationship between the interval and the duration of the target time may be indicated by the interval information, or may be defined in a protocol, or may be broadcast by an AP. In another example, the interval information may indicate an interval between an end time of a first target time and a start time of a second target time in two adjacent target times, and the second target time is later than the first target time, as shown in FIG. 6c.

It may be understood that the duration information and the interval information may further indicate that the target time is periodic, or indicate a periodic target time. To be specific, the target time may be duration that periodically cycles at an interval indicated by the interval information. It may be understood that a number of target times may be determined based on the information indicating the total persistence in the first communication frame, or may be determined based on a termination frame, or the like. For a number of cycles of the target time, refer to the following descriptions of the information indicating the total persistence.

For example, the first communication frame includes the information indicating the start time. The start time may be understood as a start time of a first target time in at least two target times, or may be understood as a start time of a first target time in the periodic target time. By indicating the start time, the first communication apparatus can clearly learn of the start time of the periodic target time. Certainly, the first communication frame may alternatively not include the information indicating the start time. In this case, communication parties may agree to use, as the start time, a time at which the first communication frame is received, or use, as the start time, a time at which the first communication frame is received plus a specific time offset, or the like. Details are not enumerated in embodiments of this application. Related descriptions of the information indicating the start time herein are also applicable to FIG. 11 below.

In an example, the first communication frame may include the information indicating the total persistence (persistence). The information indicating the total persistence may indicate an end time of a procedure, an end time of the periodic target time, or the like. The total persistence may be measured in a TBTT, a TU, or the like. Examples are not enumerated herein again. In another example, an AP indicates, by no longer including related information (for example, not carrying the first communication frame) in a beacon (beacon) frame, that the procedure ends, or an AP indicates, by broadcasting an element (element) indicating that the procedure ends, that the procedure ends. For example, a non-AP STA may alternatively end the procedure by transmitting a termination frame. The termination frame may be an action frame (action frame) (or referred to as a function frame). Related descriptions of the information indicating the total persistence herein are also applicable to FIG. 11 below.

For example, the first communication frame may include the procedure identifier, and the procedure identifier may have a correspondence with one or more of the first NSS information, the duration information, the interval information, the information indicating the start time, and the information indicating the total persistence that are included in the first communication frame. In other words, the procedure identifier may be used to identify a procedure (or distinguish between different procedures), and a parameter set of the procedure may include one or more of the first NSS information, the duration information, the interval information, the information indicating the start time, and the information indicating the total persistence. Similarly, in addition to the first NSS information, the duration information, the interval information, the information indicating the start time, and the information indicating the total persistence, the parameter set of the procedure may further include one or more of the first NSTS information, indication information of a first link, indication information of a second link, second NSS information, and second NSTS information that are shown below. For example, when the first communication apparatus performs multi-party coordination with a plurality of communication apparatuses, and the first communication frame includes the procedure identifier, the first communication apparatus can effectively identify a procedure based on the procedure identifier, and identify a parameter set corresponding to the procedure. For example, the procedure shown in embodiments of this application may be understood as a procedure in which the first communication apparatus receives a signal within the periodic target time by using a number of spatial streams less than or equal to the maximum number of receive spatial streams indicated by the first NSS information, or may be understood as a procedure in which a maximum number of receive spatial streams of the first communication apparatus within the periodic target time is the maximum number of receive spatial streams indicated by the first NSS information, and a maximum number of receive spatial streams outside the target time is the maximum number of receive spatial streams indicated by the EHT capability element or the UHR capability element. For example, the procedure shown in embodiments of this application may be referred to as an NSS update procedure, an NSTS update procedure, a radio frequency resource sharing procedure, or the like. A specific name of the procedure is not limited in embodiments of this application. It may be understood that no procedure ID may be required for identification when a parameter set is established (or which may be understood as that a procedure is established) between the AP and the non-AP STA. When a plurality of procedures are allowed for establishment, the plurality of procedures may be distinguished by using procedure IDs. The first communication apparatus may perform procedure establishment or procedure ID allocation. After performing procedure establishment or procedure ID allocation, the first communication apparatus needs to notify the second communication apparatus of the information, that is, notify the second communication apparatus that an NSS used when the second communication apparatus transmits data to the first communication apparatus cannot exceed the maximum receive NSS of the first communication apparatus. For example, after obtaining the first communication frame, the second communication apparatus may limit, based on the first NSS information in the first communication frame, the NSS used when the second communication apparatus transmits the data to the first communication apparatus. It may be understood that the data shown in embodiments of this application may include specific content of the data, for example, a payload and/or control information. This is not limited in embodiments of this application.

The first communication frame shown above is applicable to the AP, the non-AP STA, a Wi-Fi chip, or the like. For the non-AP STA or the Wi-Fi chip or a functional module disposed in the non-AP STA, the first communication frame may further include the first NSTS information. The first NSTS information indicates a maximum number of transmit space-time streams of the non-AP STA within the target time. During actual application, the AP may schedule, by using a trigger frame, the non-AP STA to transmit data. In this case, the non-AP STA may indicate, by using the first NSTS information in the first communication frame, the maximum number of transmit space-time streams of the non-AP STA within the target time. In this way, when scheduling the non-AP STA, the AP learns of a number of space-time streams required by the non-AP STA.

Related descriptions of indication information of a link in the first communication frame may be described below.

In an example, the first communication frame may not include indication information of a link, and the first NSS information may indicate a maximum number of receive spatial streams on a transmit link in the first communication apparatus within the target time, or the first NSS information may indicate a maximum number of receive spatial streams on a transmit link between the first communication apparatus and the second communication apparatus within the target time. The transmit link is a link for transmitting the first communication frame. Similarly, the first NSTS information may indicate a maximum number of transmit space-time streams on the transmit link in the first communication apparatus within the target time, or the like.

In another example, the first communication frame may further include the indication information of the first link, and the first NSS information may indicate a maximum number of receive spatial streams on the first link in the first communication apparatus within the target time, or the first NSS information may indicate a maximum number of receive spatial streams on the first link between the first communication apparatus and the second communication apparatus within the target time. Similarly, the first NSTS information may indicate a maximum number of transmit space-time streams on the first link in the first communication apparatus within the target time, or the first NSTS information may indicate a maximum number of transmit space-time streams on the first link between the first communication apparatus and the second communication apparatus within the target time. The first link may be a transmit link, or may be a link other than the transmit link in the first communication apparatus. This is not limited in embodiments of this application. The indication information of the first link may include identification information of the first link. For example, the first communication frame may include a link ID 1, a link ID 2, or the like. Examples are not enumerated herein again. Alternatively, the indication information of the first link may be represented by a link identifier bitmap (link ID bitmap) in the first communication frame. For example, each bit in the link identifier bitmap may correspond to a link between the first communication apparatus and the second communication apparatus. For example, a value of 1 of a bit corresponding to the first link may indicate that the first communication frame includes the indication information of the first link, and a value of 0 of the bit corresponding to the first link may indicate that the first communication frame does not include the indication information of the first link. For another example, a value of 0 of a bit corresponding to the first link may indicate that the first communication frame includes the indication information of the first link, and a value of 1 of the bit corresponding to the first link may indicate that the first communication frame does not include the indication information of the first link.

For example, when the first communication frame further includes the indication information of the first link, information corresponding to the first link may be included in a same element (element). The information corresponding to the first link may include at least one of the following: the duration information, the first NSS information, the first NSTS information, the interval information, the information indicating the start time, information indicating the total persistence, or the procedure identifier. For example, the first communication frame may include a plurality of elements, and each of the plurality of elements may correspond to one link. For information corresponding to each link, refer to the descriptions of the information corresponding to the first link. Details are not described herein again.

In still another example, the first communication frame may further include the indication information of the first link, the indication information of the second link, and the second NSS information corresponding to the second link. Alternatively, the first communication frame may further include the indication information of the first link, the indication information of the second link, the second NSS information corresponding to the second link, and the second NSTS information corresponding to the second link. The first NSS information may indicate a maximum number of receive spatial streams on the first link in the first communication apparatus within the target time, and the second NSS information may indicate a maximum number of receive spatial streams on the second link in the first communication apparatus within the target time. For example, the maximum number of receive spatial streams indicated by the first NSS information may be the same as or different from the maximum number of receive spatial streams indicated by the second NSS information. This is not limited in embodiments of this application. For example, when the maximum number of receive spatial streams indicated by the first NSS information is the same as the maximum number of receive spatial streams indicated by the second NSS information, a signaling format of the first communication frame may be simplified. For example, the first communication frame may include the duration information, NSS information, the indication information of the first link, and the indication information of the second link. The NSS information may indicate a maximum number of receive spatial streams on the first link or the second link in the first communication apparatus within the target time. Similarly, the first NSTS information may indicate a maximum number of transmit space-time streams on the first link in the first communication apparatus within the target time, and the second NSTS information may indicate a maximum number of transmit space-time streams on the second link in the first communication apparatus within the target time. The maximum number of transmit space-time streams indicated by the first NSTS information may be the same as or different from the maximum number of transmit space-time streams indicated by the second NSTS information. This is not limited in embodiments of this application. Similarly, when the maximum number of transmit space-time streams indicated by the first NSTS information is the same as the maximum number of transmit space-time streams indicated by the second NSTS information, a signaling format of the first communication frame may be simplified. For example, the first communication frame may include the duration information, NSS information, NSTS information, the indication information of the first link, and the indication information of the second link. The NSS information may indicate a maximum number of receive spatial streams on the first link or the second link in the first communication apparatus within the target time. The NSTS information may indicate a maximum number of transmit space-time streams on the first link or the second link in the first communication apparatus within the target time.

For example, when the first communication apparatus is an MLD, if a radio frequency resource on a link in the MLD is limited, the MLD may share (or switch) the radio frequency resource on the link to another link (for example, the first link), or the MLD may share the radio frequency resource on the link with at least two links (for example, the first link and the second link). In this way, the first communication frame includes the indication information of the first link and the indication information of the second link, so that the second communication apparatus can effectively learn of the maximum number of receive spatial streams and/or the maximum number of transmit space-time streams on the first link in the first communication apparatus, and the maximum number of receive spatial streams and/or the maximum number of transmit space-time streams on the second link.

It may be understood that the first link and the second link shown above are merely examples. The first communication frame may include indication information of more or fewer links. For example, the first communication frame may include indication information of N links, where N is an integer greater than or equal to 1, or N is an integer greater than or equal to 2. For example, when the first communication frame includes one piece of duration information, target times corresponding to the N links may be the same, and a maximum number of receive spatial streams corresponding to each of the N links may be determined based on NSS information corresponding to the link, or a maximum number of transmit space-time streams corresponding to each link may be determined based on NSTS information corresponding to the link.

For example, when the first communication apparatus is an AP, a Wi-Fi chip disposed in the AP, a functional module disposed in the AP, or the like, the first communication frame may be any one of the following: a protected UHR action frame, a protected EHT action frame, a beacon frame, a (re)association response frame, a TWT response frame, and the like. For example, when the first communication apparatus is a non-AP STA, a Wi-Fi chip disposed in the non-AP STA, or a functional module disposed in the non-AP STA, the first communication frame may be any one of the following: a protected UHR action frame, a protected EHT action frame, a (re)association request frame, a TWT request frame, and the like. It may be understood that the protected UHR action frame or the protected EHT action frame in embodiments of this application is merely an example. With progress of the standard, there may be another type of action frame and the like subsequently. This is not limited in embodiments of this application. A specific type of the first communication frame listed above is merely an example, and shall not be understood as a limitation on embodiments of this application. For an example format of the first communication frame, refer to the following descriptions. Details are not described herein.

502: The first communication apparatus transmits the first communication frame, and correspondingly, the second communication apparatus receives the first communication frame.

503: The second communication apparatus parses the first communication frame.

For example, the second communication apparatus may effectively learn of the maximum number of receive spatial streams of the first communication apparatus within the target time, and/or learn of the maximum number of transmit space-time streams of the first communication apparatus within the target time by parsing the first communication frame. In this way, within the target time, the second communication apparatus may transmit data by using a number of transmit space-time streams corresponding to the maximum number of receive spatial streams, and/or receive data by using a number of receive spatial streams corresponding to the maximum number of transmit space-time streams. For specific descriptions of parsing the first communication frame by the second communication apparatus, refer to the foregoing descriptions of the first communication frame. Related descriptions of the first communication frame are not described in detail herein again.

In a possible implementation, when the method shown in FIG. 5 includes step 501 to step 503, the first communication apparatus indicates the maximum number of receive spatial streams and/or the maximum number of transmit space-time streams of the first communication apparatus within the target time by transmitting the first communication frame, and the second communication apparatus learns of the maximum number of receive spatial streams and/or the maximum number of transmit space-time streams of the first communication apparatus within the target time by parsing the first communication frame. Correspondingly, the second communication apparatus may alternatively indicate a maximum number of receive spatial streams and/or a maximum number of transmit space-time streams of the second communication apparatus within a target time by transmitting the first communication frame, and the first communication apparatus learns of a maximum number of receive spatial streams and/or a maximum number of transmit space-time streams of the second communication apparatus within a target time (which may be the same as or different from the target time corresponding to the first communication apparatus) by parsing the first communication frame. That is, the first communication apparatus and the second communication apparatus may notify a peer end of the maximum number of receive spatial streams and/or the maximum number of transmit space-time streams of each other within the target time in an independent indication manner. This manner is more flexible.

For example, as shown in FIG. 4, when the AP 11 and the associated station of the AP 11 remain silent within the time period 1, radio frequency resources of the AP 11 and the associated station of the AP 11 may be shared with the AP 12. This improves utilization of the radio frequency resources. In this way, the AP 12 may broadcast the first communication frame to notify the associated station of the AP 12 that a receive spatial stream capability of the AP 12 within the time period 1 (the time period 1 may be understood as the target time shown in embodiments of this application) is increased (for example, from two spatial streams to three spatial streams or four spatial streams). The associated station of the AP 12 may learn, by parsing the first communication frame, that a maximum number of receive spatial streams of the AP 12 within the time period 1 is different from the maximum number of receive spatial streams of the AP 12 outside the time period 1. Therefore, the associated station of the AP 12 may perform data transmission with the AP 12 by using three spatial streams or four spatial streams within the time period 1. It may be understood that radio frequency resources are usually not simply moved or linearly accumulated when the radio frequency resources are switched between different links. For example, each AP originally uses a maximum of two receive spatial streams. When a radio frequency resource of the AP 11 is shared with (or referred to as switched to) the AP 12 for use because the radio frequency resource of the AP 11 is idle, a number of receive spatial streams of the AP 12 cannot exceed a sum of maximum numbers of receive spatial streams of the AP 11 and the AP 12, for example, four receive spatial streams. However, there may alternatively be three receive spatial streams after sharing (or switching). This is because parsing complexity of four receive spatial streams is far higher than twice parsing complexity of two receive spatial streams. In consideration of implementation complexity, the AP 12 may use a maximum of three receive spatial streams. Alternatively, this is because a signal to interference plus noise ratio required to support four receive spatial streams is much greater than a signal to interference plus noise ratio required to support two receive spatial streams, or this is because a channel condition does not support four receive spatial streams. In conclusion, a maximum number of receive spatial streams after sharing (or switching) is greater than a maximum number of receive spatial streams on any single link, but is less than or equal to a sum of maximum numbers of receive spatial streams on a plurality of links. How to select the maximum number of receive spatial streams after sharing (or switching) is related to a specific implementation of a device, a switching reason, and a channel condition. Therefore, a specific number of spatial streams is not limited in embodiments of this application. Similarly, a specific number of space-time streams is not limited in embodiments of this application either.

In another possible implementation, the method shown in FIG. 5 may further include the following steps.

504: The second communication apparatus transmits a second communication frame, and correspondingly, the first communication apparatus receives the second communication frame.

The second communication frame includes third NSS information and/or third NSTS information, the third NSS information indicates a maximum number of receive spatial streams of the second communication apparatus within the target time, and the third NSTS information indicates a maximum number of transmit space-time streams of the second communication apparatus within the target time. Duration information, interval information, information indicating a start time, and information indicating total persistence that correspond to the third NSS information and/or the third NSTS information may be all the same as those in the first communication frame. For example, the second communication apparatus may feed back the second communication frame including the third NSS information and/or the third NSTS information, to indicate that a contention time period and a silence time period of the second communication apparatus are the same as those of the first communication apparatus. In this way, the second communication frame can be simplified, and signaling overheads can be reduced. For example, in a scenario in which a plurality of APs perform TDMA-based coordination, a contention time period of an AP in a same BSS may be the same as a contention time period of a non-AP STA, and a silence time period of the AP in the same BSS may be the same as a silence time period of the non-AP STA. In this way, step 501 to step 504 shown in FIG. 5 are performed, so that the second communication frame can be effectively simplified, maintenance complexity of the AP can be reduced (for example, target times and intervals maintained on an AP side are the same), and signaling overheads of the second communication frame can be reduced. For example, the first communication apparatus is an AP, and the second communication apparatus is a non-AP STA. In this case, after the AP transmits the first communication frame in a broadcast or unicast manner, the non-AP STA may indicate, to the AP, a maximum number of transmit space-time streams and/or a maximum number of receive spatial streams that are/is different from those of the AP, and a time parameter is the same as that of the AP. The time parameter shown herein includes the duration information, the interval information, the information indicating the start time, and the information indicating the total persistence that are shown above.

For example, the second communication frame may further include a procedure identifier. The procedure identifier may be the same as the procedure identifier in the first communication frame, or the procedure identifier may indicate that a time parameter corresponding to the third NSS information and/or the third NSTS information is the same as a time parameter that has a same procedure identifier in the first communication frame.

In an example, when the first communication frame does not include the indication information of the link, the second communication frame may also not include the indication information of the link. In another example, when the first communication frame includes the indication information of the first link, the second communication frame may also include the indication information of the first link. In still another example, when the first communication frame includes the indication information of the first link and the indication information of the second link, the second communication frame may also include the indication information of the first link, the indication information of the second link, and fourth NSS information and/or fourth NSTS information corresponding to the second link. The third NSS information and/or the third NSTS information correspond/corresponds to the first link. The third NSS information may indicate a maximum number of receive spatial streams on the first link in the second communication apparatus within the target time, and the fourth NSS information may indicate a maximum number of receive spatial streams on the second link in the second communication apparatus within the target time. The third NSTS information may indicate a maximum number of transmit space-time streams on the first link in the second communication apparatus within the target time, and the fourth NSTS information may indicate a maximum number of transmit space-time streams on the second link in the second communication apparatus within the target time. For related descriptions of the indication information of the link, refer to related descriptions of step 501. Details are not described herein again.

After receiving the second communication frame, the first communication apparatus may parse the second communication frame, to learn of the maximum number of transmit space-time streams and/or the maximum number of receive spatial streams of the second communication apparatus within the target time. Related descriptions of parsing the second communication frame by the first communication apparatus are not described in detail herein again.

In this embodiment of this application, when there is an idle radio frequency resource (or referred to as that a radio frequency resource in a limited state) on one or more links in the first communication apparatus, the first communication apparatus may dynamically schedule the radio frequency resource to another link for use. That is, the first communication apparatus may notify the second communication apparatus of the maximum number of receive spatial streams and/or the maximum number of transmit space-time streams of the first communication apparatus within the target time by using the first communication frame. In this way, utilization of radio frequency resources is effectively improved.

Currently, there is the following solution A: updating, by using an operation mode (operation mode, OM) control field, an NSS parameter of a STA (for example, including an AP or a non-AP STA) whose bandwidth is less than or equal to 160 MHz, or updating, by using an EHT OM control field, an NSS parameter of a STA whose bandwidth is 320 MHz. The NSS parameter shown herein may be understood as a maximum number of space-time streams. However, in the foregoing solution A, the OM or EHT OM control field indicates a maximum number of receive spatial streams. After the STA receives the OM or EHT OM control field and before the STA receives the OM or EHT OM control field again, the STA needs to receive, within this time period, a signal by using a spatial stream whose number is less than or equal to the maximum number of receive spatial streams, and the NSS parameter does not change within this time period. In other words, the STA does not update a number of spatial streams within a specific time period, or the STA does not increase a number of spatial streams within a specific time period. The foregoing solution A is a static adjustment manner. However, in this solution, the maximum number of receive spatial streams of the first communication apparatus within the target time is different from the maximum number of receive spatial streams of the first communication apparatus outside the target time, and the first communication apparatus may further adjust the maximum number of receive spatial streams within the target time. In addition, in this solution, the maximum number of receive spatial streams of the first communication apparatus within the target time is greater than the maximum number of receive spatial streams of the first communication apparatus outside the target time. A manner of adjusting the number of spatial streams in this solution is more flexible.

The following describes a format of the first communication frame by using examples.

### Example 1

FIG. 7a is a diagram of a format of the first communication frame. As shown in FIG. 7a, the first communication frame may include the following fields: a start time field, a duration (duration) field, an interval (interval) field, and a receive spatial stream (Rx NSS) field. The start time field may be used to carry the information indicating the start time, the duration field is used to carry the duration information, the interval field is used to carry the interval information, and the receive spatial stream field is used to carry the first NSS information. For descriptions of the fields, refer to FIG. 5. Details are not described herein again.

FIG. 7b is a diagram of a format of the first communication frame. As shown in FIG. 7b, the first communication frame may include the following fields: a start time field, a duration (duration) field, an interval (interval) field, a receive spatial stream (Rx NSS) field, and a persistence (persistence) field. The persistence field may be used to carry the information indicating the total persistence. For descriptions of other fields, refer to FIG. 7a, FIG. 5, or the like. Details are not described herein again.

FIG. 7c is a diagram of a format of the first communication frame. As shown in FIG. 7c, the first communication frame may include the following fields: a start time field, a duration (duration) field, an interval (interval) field, a receive spatial stream (Rx NSS) field, and a transmit space-time stream (Tx NSTS) field. The transmit space-time stream field may be used to carry the first NSTS information. For related descriptions of FIG. 7c, refer to FIG. 7a, FIG. 5, or the like. Details are not described herein again.

FIG. 7d is a diagram of a format of the first communication frame. As shown in FIG. 7d, the first communication frame may include the following fields: a start time field, a duration (duration) field, an interval (interval) field, a receive spatial stream (Rx NSS) field, a transmit space-time stream (Tx NSTS) field, and a persistence field. For related descriptions of FIG. 7d, refer to FIG. 7a, FIG. 7b, FIG. 7c, FIG. 5, or the like. Details are not described herein again.

It may be understood that the first communication frame shown in FIG. 7c and FIG. 7d may be transmitted by the non-AP STA. For descriptions of the non-AP STA, refer to related descriptions of the first communication apparatus being the non-AP STA in FIG. 5. Details are not described herein again.

FIG. 7e is a diagram of a format of the first communication frame. As shown in FIG. 7e, in comparison with FIG. 7a, the first communication frame further includes a procedure ID field. The procedure ID field is used to carry the procedure identifier. For related descriptions of FIG. 7e, refer to FIG. 7a to FIG. 7d, FIG. 5, or the like. Details are not described herein again. The first communication frame shown in FIG. 7b to FIG. 7d may also include the procedure ID field. Examples are not enumerated in embodiments of this application.

It may be understood that the first communication frame shown in FIG. 7a to FIG. 7e does not include the indication information of the link, which indicates that a link on which the receive spatial stream field and the transmit space-time stream field act is a transmit link, that is, may indicate a maximum number of receive spatial streams or a maximum number of receive spatial streams and a maximum number of transmit space-time streams on the transmit link in the first communication apparatus within the target time. FIG. 7a to FIG. 7e each show the receive spatial stream field. FIG. 7c and FIG. 7d each show the receive spatial stream field and the transmit space-time stream field. In a specific implementation, the first communication frame may alternatively include the transmit space-time stream field and not include the receive spatial stream field. A sequence of the fields shown in FIG. 7a to FIG. 7e is merely an example, and shall not be understood as a limitation on embodiments of this application.

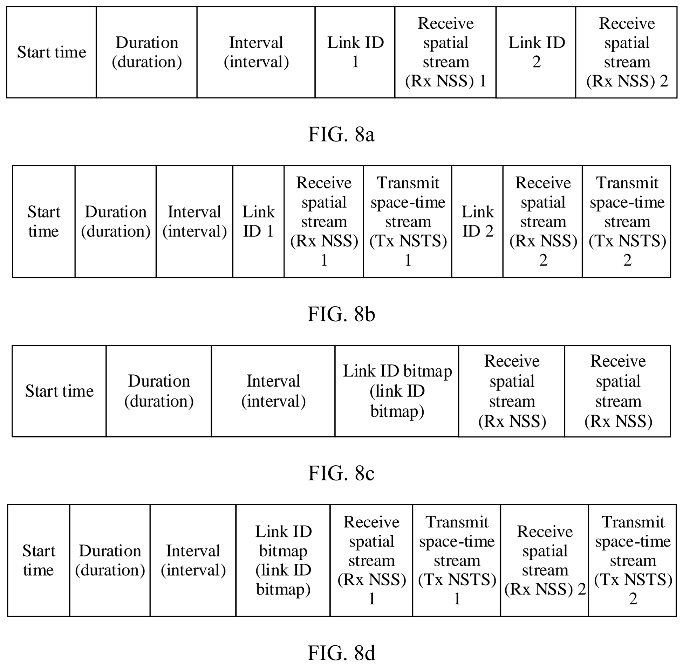

FIG. 8a and FIG. 8b each are a diagram of a format of the first communication frame. As shown in FIG. 8a, the first communication frame may include the following fields: a start time field, a duration (duration) field, an interval (interval) field, a link ID 1 field, a receive spatial stream (Rx NSS) 1 field, a link ID 2 field, and a receive spatial stream 2 field. The link ID 1 field may be used to carry an ID of a link 1, the receive spatial stream field 1 following the link ID 1 field may be used to carry NSS information (for example, the first NSS information) corresponding to the link ID 1, the link ID 2 field may be used to carry an ID of a link 2, and the receive spatial stream field 2 following the link ID 2 field may be used to carry NSS information (for example, the second NSS information) corresponding to the link ID 2. Similarly, in FIG. 8b, a receive spatial stream field 1 and a transmit space-time stream field 1 that follow a link ID 1 field may be used to respectively carry NSS information (for example, the first NSS information) and NSTS information (for example, the first NSTS information) that correspond to a link ID 1, and a receive spatial stream field 2 and a transmit space-time stream field 2 that follow a link ID 2 field may be used to respectively carry NSS information (for example, the second NSS information) and NSTS information (for example, the second NSTS information) that correspond to a link ID 2. In the first communication frame shown in FIG. 8a and FIG. 8b, each link ID field may correspond to a respective receive spatial stream field and/or a respective transmit space-time stream field. Therefore, this manner is more flexible.

FIG. 8c and FIG. 8d each are a diagram of a format of the first communication frame. As shown in FIG. 8c, the first communication frame may include a link ID bitmap field. The link ID bitmap field may indicate whether each link in the first communication frame corresponds to a receive spatial stream field and/or a transmit space-time stream field. For example, a value of 1 of a bit in the link ID bitmap field (which is merely an example) indicates that a link corresponding to the bit in the first communication frame corresponds to a receive spatial stream field and/or a transmit space-time stream field. For example, a length of the link ID bitmap field may be equal to a maximum number of links that can be established between the first communication apparatus and the second communication apparatus. For example, the link ID bitmap field may occupy 16 bits or eight bits. Certainly, the 16 bits or the eight bits shown herein are merely examples. For example, in a specific implementation, the link ID bitmap field may alternatively occupy more or fewer bits. For example, if content carried in the link ID bitmap field is 0011 0101 0000 0100, it indicates that the first communication frame sequentially includes receive spatial stream fields corresponding to a link ID 2, a link ID 3, a link ID 5, a link ID 7, and a link ID 13 (as shown in FIG. 8c), or the first communication frame sequentially includes receive spatial stream fields and transmit space-time stream fields that correspond to a link ID 2, a link ID 3, a link ID 5, a link ID 7, a link ID 13 (as shown in FIG. 8d). In the first communication frame shown in FIG. 8c and FIG. 8d, the link ID bitmap indicates the receive spatial stream field and/or the transmit space-time stream field that correspond/corresponds to each link, so that signaling overheads can be effectively reduced. For example, when there are a large number of links, overheads of the indication information of the link can be reduced. For example, one link ID field may occupy four bits, and four link ID fields require 16 bits. When the link ID bitmap is used, 16 bits may indicate a maximum of 16 links.

It may be understood that FIG. 8a to FIG. 8d show only examples of the receive spatial stream field and the transmit space-time stream field corresponding to two links, and shall not be understood as a limitation on embodiments of this application.

For example, the first communication frame shown in FIG. 7a to FIG. 7e or FIG. 8a to FIG. 8d may be understood as a new protected EHT action frame, a new protected UHR action frame, or the like.

### Example 2

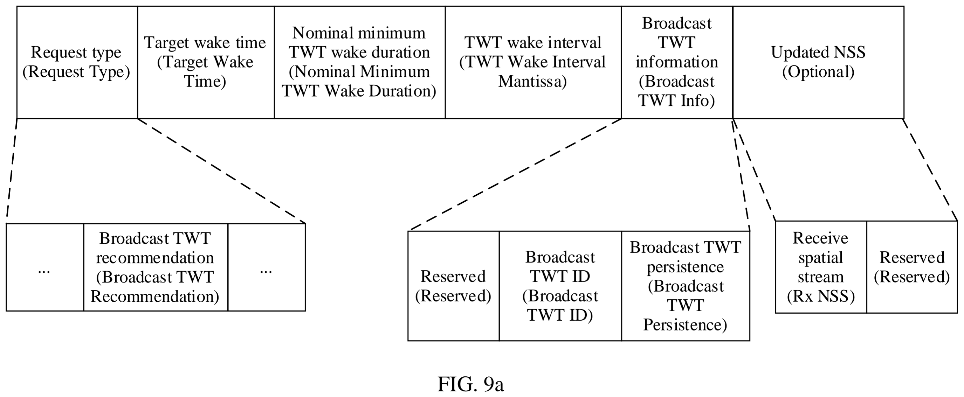

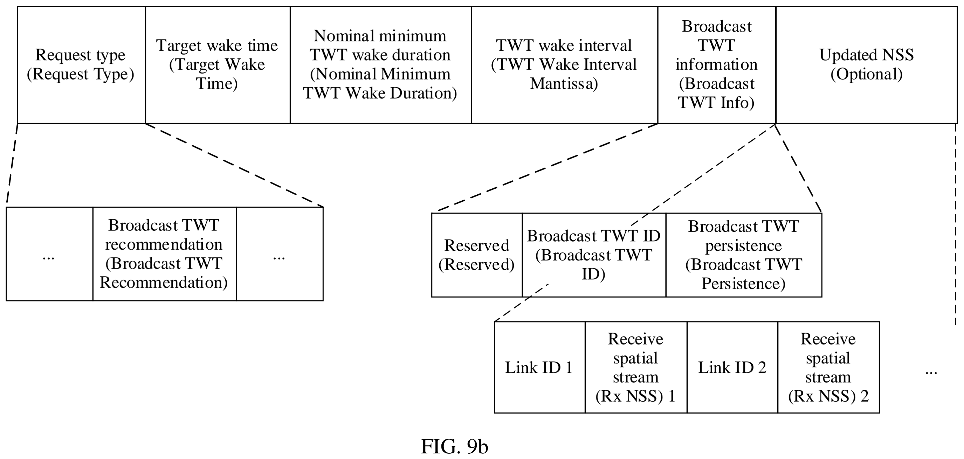

FIG. 9a and FIG. 9b each are a diagram of a format of the first communication frame. As shown in FIG. 9a and FIG. 9b, the first communication frame may include the following fields: a request type (request type) field, a target wake time (target wake time, TWT) field, a nominal minimum TWT wake duration (nominal minimum TWT wake duration) field, a TWT wake interval (TWT wake interval mantissa) field, a broadcast TWT information (broadcast TWT info) field, and an updated NSS (updated NSS) field. For example, the request type field may include a broadcast TWT recommendation (broadcast TWT recommendation) field, and the broadcast TWT information field may include a broadcast TWT ID (broadcast TWT ID) field and a broadcast TWT persistence (broadcast TWT persistence) field. As shown in FIG. 9a, the updated NSS field may include a receive spatial stream field. As shown in FIG. 9b, the updated NSS field may include a link ID 1 field, a receive spatial stream 1 field, a link ID 2 field, and a receive spatial stream 2 field. It may be understood that whether the updated NSS field appears may be determined by using an indication field (which is specifically a B7 bit) in a control field (control field) in a TWT element. If a value of the indication field is a first value (for example, 1), the updated NSS field may appear in the TWT element; or if a value of the indication field is a second value (for example, 0), the updated NSS field may not appear in the TWT element.

For example, the first communication frame may be a broadcast frame, and the broadcast frame may include a broadcast-type TWT element. The fields shown in FIG. 9a and FIG. 9b are included in the TWT element. For example, the target wake time field in the broadcast-type TWT element may indicate a start time of a TWT service period (service period, SP), that is, the field may be used to carry the information indicating the start time. The nominal minimum TWT wake duration field may indicate persistence of the TWT SP, that is, the field may be used to carry the information indicating the total persistence. The TWT wake interval field may indicate an interval between two adjacent TWT SPs, that is, the field may be used to carry the interval information. The broadcast TWT ID field may be used to carry the procedure identifier. As shown in FIG. 9a, the updated NSS field may be used to carry the first NSS information. Alternatively, as shown in FIG. 9b, the updated NSS field may be used to carry indication information of a link and NSS information corresponding to the link. For example, the updated NSS field may include the link ID 1 field, the receive spatial stream 1 field, the link ID 2 field, the receive spatial stream 2 field, and the like. Examples are not enumerated herein again.

For example, a value of the broadcast TWT recommendation field in the request type field may be a target value. The target value may indicate that a type of the broadcast TWT is a type indicating the NSS information, or the target value may be used to distinguish between parsing manners of the fields in the TWT element. For example, the second communication apparatus may parse the TWT element based on the target value, to learn of the maximum number of receive spatial streams of the first communication apparatus within the target time. For example, the target value may be any one of 5 to 7.

It may be understood that the broadcast TWT ID field in the broadcast TWT information field shown in FIG. 9a and FIG. 9b may indicate the procedure identifier. For descriptions of the procedure identifier, refer to FIG. 5. Details are not described herein again.

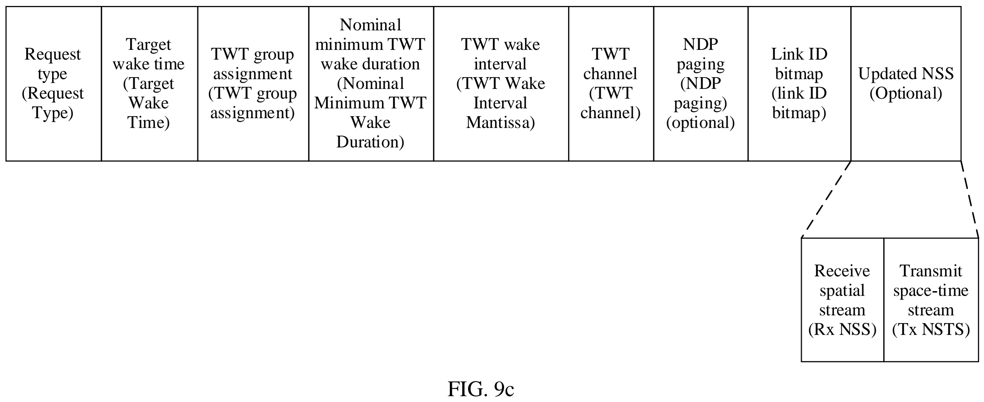

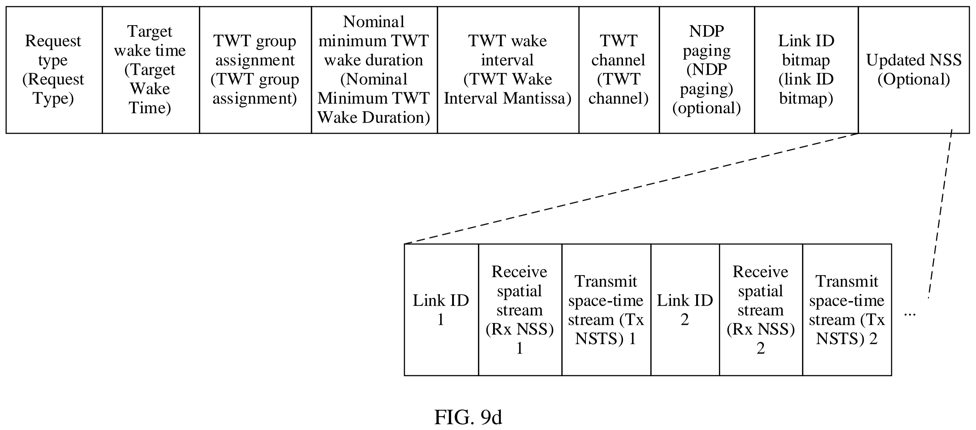

FIG. 9c and FIG. 9d each are a diagram of a format of the first communication frame. As shown in FIG. 9c and FIG. 9d, the first communication frame may include the following fields: a request type (request type) field, a target wake time (target wake time, TWT) field, a TWT group assignment (TWT group assignment) field, a nominal minimum TWT wake duration (nominal minimum TWT wake duration) field, a TWT wake interval (TWT wake interval mantissa) field, a TWT channel (TWT channel) field, a null data packet (null data packet, NDP) paging (NDP paging) field, a link ID bitmap field, and an updated NSS (updated NSS) field. For example, as shown in FIG. 9c, the updated NSS field may include a receive spatial stream field and a transmit space-time stream field. As shown in FIG. 9d, the updated NSS field may include a link ID 1 field, a receive spatial stream 1 field, a transmit space-time stream 1 field, a link ID 2 field, a receive spatial stream 2 field, and a transmit space-time stream 2 field.

For example, the fields shown in FIG. 9c and FIG. 9d may be included in a personal-type TWT element. For related descriptions of the target wake time field, the nominal minimum TWT wake duration, and the TWT wake interval, refer to FIG. 9a and FIG. 9b. Details are not described herein again. For related descriptions of the link ID bitmap shown in FIG. 9c and FIG. 9d, refer to the foregoing descriptions. Details are not described herein again. In other words, in this embodiment of this application, the link ID bitmap may be reused to carry the indication information of the link. For FIG. 9c and FIG. 9d, the procedure identifier may be carried in a TWT flow identifier (flow identifier) field (not shown in FIG. 9c and FIG. 9d) in the request type (Request Type) field.

For example, when the first communication apparatus is a non-AP STA or a Wi-Fi chip or a functional module disposed in the non-AP STA, the non-AP STA may indicate, by using the personal-type TWT element, a receive space-time stream field and a transmit space-time stream field that are updated in the TWT SP. Because the personal-type TWT element is carried in a unicast frame, an AP can learn of content that needs to be indicated by the non-AP STA (or can learn of use and an objective of the personal-type TWT element) after identifying the receive spatial stream field and the transmit space-time stream field. In this way, there may be no need to be set a target value for the personal-type TWT element shown in FIG. 9c and FIG. 9d, in other words, there is no need to set a new TWT type.

In this embodiment of this application, a frame structure of the TWT element is reused. Because the TWT element can originally indicate a plurality of periodic time periods, there is no need to redesign a time-related parameter, so that design complexity of the first communication frame is simplified.

### Example 3

FIG. 10a to FIG. 10d each are a diagram of a format of the second communication frame. FIG. 10a to FIG. 10d show an example of a procedure ID field. In a specific implementation, whether the procedure ID field exists may be determined based on a number of procedures. For example, when there is one procedure, the second communication frame may not include the procedure ID field; or when there are two or more procedures, the second communication frame may include the procedure ID field. For related descriptions of the procedure ID field, refer to the procedure identifier shown in FIG. 5. Details are not described herein again. The second communication frame shown in FIG. 10a includes the procedure ID field and a receive spatial stream field, and a time parameter of a procedure identified by the procedure ID field is the same as the time parameter having the same procedure ID in the first communication frame. The second communication frame shown in FIG. 10b may include the procedure ID field, a link ID 1 field, a receive spatial stream 1 field, a link ID 2 field, and a receive spatial stream 2 field. It may be understood that the link ID fields shown in FIG. 10b are merely examples. For example, the link ID field may be replaced with a link ID bitmap field. Details are not described herein again. For related descriptions of FIG. 10c and FIG. 10d, refer to FIG. 10a, FIG. 10b, FIG. 5, or the like. Details are not described herein again.

FIG. 11 is a schematic flowchart of a communication method according to an embodiment of this application. For related descriptions of a first communication apparatus and a second communication apparatus in the method, refer to the foregoing descriptions. It may be understood that a first link and a second link shown below may be understood as a link between the first communication apparatus and the second communication apparatus, or may be understood as a link in the first communication apparatus, or the like. For a relationship between the first communication apparatus, and the first link and the second link, refer to related descriptions in FIG. 5. Details are not described herein again. As shown in FIG. 11, the method includes the following steps.

1101: The first communication apparatus generates a communication frame, for example, the communication frame includes duration information, indication information of a first link, indication information of a second link, and number of spatial streams NSS information.

In addition to the indication information of the first link, the indication information of the second link, and the NSS information, the communication frame may include the duration information, information indicating a start time, and information indicating a switching time.

For example, the NSS information indicates a maximum number of receive spatial streams on the first link within a first time and a maximum number of receive spatial streams on the second link within a second time. In other words, the maximum number of receive spatial streams on the first link within the first time is equal to the maximum number of receive spatial streams on the second link within the second time. Duration of the first time is the same as duration of the second time, a start time of the second time is different from a start time of the first time, and the duration information indicates the duration of the first time or the duration of the second time. The first time may be understood as a first time period in the procedure shown in this embodiment of this application, and the first time period corresponds to the maximum number of receive spatial streams on the first link. It may be understood that a maximum number of receive spatial streams on the first link within the second time may be determined based on the maximum number of receive spatial streams corresponding to the first link in an EHT capability element or a UHR capability element. For example, the maximum number of receive spatial streams on the first link within the first time is greater than the maximum number of receive spatial streams on the first link within the second time. A maximum number of receive spatial streams on the second link within the first time may be determined based on the maximum number of receive spatial streams corresponding to the second link in the EHT capability element or the UHR capability element. For example, the maximum number of receive spatial streams on the second link within the first time is less than the maximum number of receive spatial streams on the second link within the second time. For related descriptions of the EHT capability element or the UHR capability element, refer to FIG. 5. Details are not described herein again. For example, the maximum number of receive spatial streams on the second link within the first time may be 0 (that is, there is no receiving capability), and the maximum number of receive spatial streams on the first link within the second time may be 0. For another example, the maximum number of receive spatial streams on the second link within the first time may alternatively be 1 (a basic single-stream receiving capability is reserved), and the maximum number of receive spatial streams on the first link within the second time may be 1 (a basic single-stream receiving capability is reserved).

For related descriptions of the indication information of the first link and the indication information of the second link, refer to FIG. 5 (for example, related descriptions of the link ID and the link identifier bitmap in FIG. 5). Details are not described herein again. The first link and the second link are merely examples. For example, the communication frame may further include indication information of a third link.

For example, the information indicating the start time may indicate the start time of the first time. For descriptions of the information indicating the start time, refer to related descriptions of the information indicating the start time shown in FIG. 5. Details are not described herein again. In this embodiment of this application, the first time and the second time may be included in a first periodicity. Duration of the first periodicity is equal to M times the duration indicated by the duration information, where M is greater than or equal to a number of links indicated in the communication frame, or M is greater than or equal to a number of bits whose values are 1 (which is merely an example) in a link identifier bitmap in the communication frame. For example, a value of 1 of a bit corresponding to the first link may indicate that the communication frame includes the indication information of the first link, or may be understood as that the NSS information in the communication frame corresponds to the first link, or the NSS information, the duration information, and the like in the communication frame correspond to the first link, or a maximum number of receive spatial streams on the first link within a corresponding time is indicated by the NSS information in the communication frame. A value of 0 of a bit corresponding to the first link may indicate that the communication frame does not include the indication information of the first link, and a maximum number of receive spatial streams on a link corresponding to the bit whose value is 0 is not indicated by the NSS information in the communication frame. For example, if a number of bits whose values are 1 in the link identifier bitmap is N, or a number of link identifiers included in the communication frame is N, M is greater than or equal to N. If the duration indicated by the duration information is 1 TBTT, the duration of the first periodicity is equal to M TBTTs, where M is greater than or equal to N. In this embodiment of this application, for related descriptions of a number of periodicities (or may be understood as total persistence), refer to related descriptions of the information indicating the total persistence in FIG. 5. Details are not described herein again.

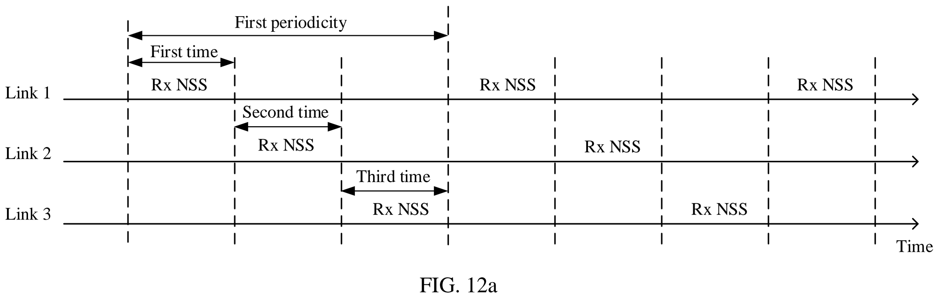

In an example, the start time of the second time may be equal to an end time of the first time. As shown in FIG. 12a, a link 1, a link 2, and a link 3 sequentially occupy the first time, the second time, and a third time. The first time, the second time, and the third time are located in the first periodicity. For example, the indication information of the link is indicated by using identification information of the link. For example, a link ID occupies four bits. If a value of the link ID is 0 to 14, the link ID may be considered as valid. If a value of the link ID is 15, it indicates that the link ID cannot be allocated and is invalid. In FIG. 12a, if a link ID 1=0, a link ID 2=1, and a link ID 3=2, it may indicate that the link 1, the link 2, and the link 3 each correspond to a time. For example, the link 1 corresponds to the first time, the link 2 corresponds to the second time, and the link 3 corresponds to the third time. It may be understood that descriptions of the values of the link IDs are merely examples. For example, with progress of the standard, there may be more values for the link ID, or it may be understood that there may be a larger number of links that can be established between two multi-link devices. This is not limited in embodiments of this application.

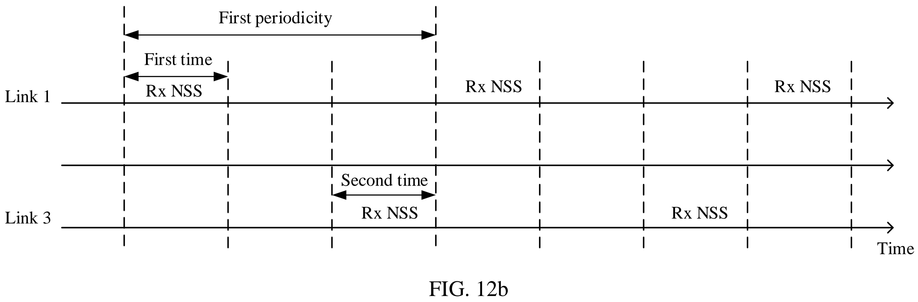

In another example, an interval between the start time of the second time and the end time of the first time is an integer multiple of the duration indicated by the duration information. For example, the interval between the start time of the second time and the end time of the first time is T times the duration indicated by the duration information, where T is less than M. As shown in FIG. 12b, the interval between the start time of the second time and the end time of the first time is the duration indicated by the duration information. In FIG. 12b, if a link ID 1=0, a link ID 2=15, and a link ID 3=2, it may indicate that the link 1 corresponds to the first time, the link ID 2=15 indicates an invalid link, and indicates that no link uses, within a blank time between the first time and the second time shown in FIG. 12b, a spatial stream whose number of spatial streams is less than or equal to the maximum number of receive spatial streams indicated by the NSS information (or may be understood as that no link uses an NSS update procedure shown in this embodiment of this application), and the link 3 corresponds to the second time.

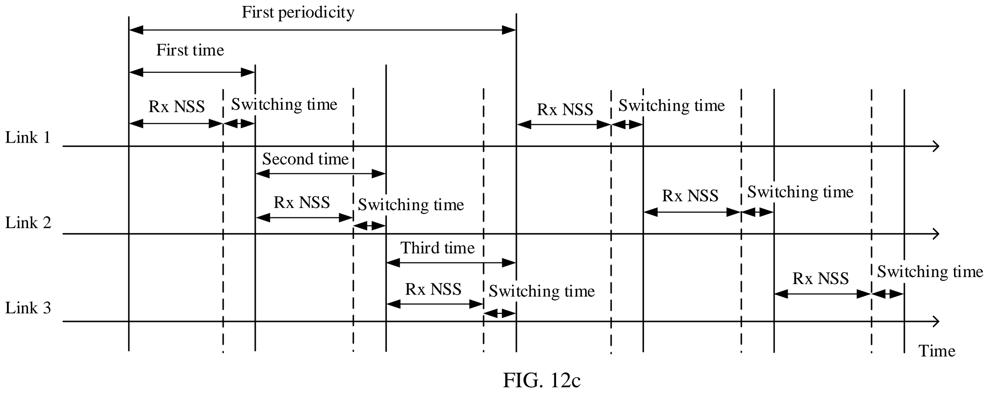

For example, the communication frame may include the information indicating the switching time, the information indicating the switching time indicates the switching time, and the switching time is a time at which the first communication apparatus performs radio frequency switching within the first time or the second time. In other words, based on the information indicating the switching time, the first communication apparatus needs to complete data receiving, transmitting, or the like before the switching time arrives. As shown in FIG. 12c, the communication frame may indicate a maximum number of receive spatial streams on the link 1 other than the switching time within the first time, a maximum number of receive spatial streams on the link 2 other than the switching time within the second time, and a maximum number of receive spatial streams on the link 3 other than the switching time within the third time. It may be understood that a position of the switching time shown in FIG. 12c is merely an example. For example, the switching time may be located at a start position of a time corresponding to each link. For example, the switching time may be located at a start position of the first time, or the switching time may be located at a start position of the second time, or the like. Examples are not enumerated herein again. For example, when the switching time (a time for switching from the maximum number of receive spatial streams indicated by the EHT capability element or the UHR capability element to the maximum number of receive spatial streams indicated by the NSS information) is located at the start position of the time corresponding to each link, a switching time may also be included in a last time of the total persistence. The switching time may be used to switch, for the corresponding link, from the maximum number of receive spatial streams indicated by the NSS information to the maximum number of receive spatial streams indicated by the EHT capability element or the UHR capability element. For example, when the switching time (for example, a time for switching from the maximum number of receive spatial streams indicated by the NSS information to the maximum number of receive spatial streams indicated by the EHT capability element or the UHR capability element) is located at an end position of a time corresponding to each link, a switching time may also be included at a start position of a first time (the first time). The switching time may be used to switch, for the corresponding link, from the maximum number of receive spatial streams indicated by the EHT capability element or the UHR capability element to the maximum number of receive spatial streams indicated by the NSS information.

In an example, a maximum number of receive spatial streams within the switching time may be determined based on the maximum number of receive spatial streams indicated by the EHT capability element or the UHR capability element, or it may be understood that a maximum number of receive spatial streams within the switching time may be determined based on a number of receive spatial streams on a single link. In another example, a number of receive spatial streams within the switching time may be 0, that is, a corresponding link cannot perform receiving and transmitting within the switching time. For example, the first link shown in FIG. 12c cannot perform receiving and transmitting within the switching time within the first time, or the second link cannot perform receiving and transmitting within the switching time within the second time. Examples are not enumerated herein again.

Similarly, for the method shown in FIG. 5, the first communication apparatus also needs to perform radio frequency switching. Therefore, the method shown in FIG. 5 also relates to a switching time. There may be the following manners for the switching time in the method shown in FIG. 5.

Manner 1: The switching time is placed outside the target time. As shown in FIG. 6a to FIG. 6c, the switching time may be located outside the target time. In this case, the first communication apparatus can perform radio frequency switching in advance before the target time, so that the first communication apparatus has completed radio frequency switching when the target time arrives.

Manner 2: The switching time is placed within the target time. As shown in FIG. 6a to FIG. 6c, the switching time may be located at a start position and/or an end position of the target time. In this case, the first communication frame may include the information indicating the switching time. For example, because the maximum number of receive spatial streams used by the first communication apparatus within the target time is different from a maximum number of receive spatial streams used by the first communication apparatus outside the target time, the switching time may include the time for switching from the maximum number of receive spatial streams indicated by NSS information (for example, the first NSS information or the second NSS information) to the maximum number of receive spatial streams indicated by the EHT or UHR capability element, and/or include the time for switching from the maximum number of receive spatial streams indicated by the EHT or UHR capability element to the maximum number of receive spatial streams indicated by the NSS information (for example, the first NSS information or the second NSS information).

It may be understood that the foregoing descriptions of the number of receive spatial streams is also applicable to descriptions of a number of transmit space-time streams.

For example, when the first communication apparatus is a non-AP STA, or a Wi-Fi chip or a functional module disposed in the non-AP STA, or the like, the communication frame may further include NSTS information. The NSTS information indicates a maximum number of transmit space-time streams on the first link within the first time and a maximum number of transmit space-time streams on the second link within the second time. The maximum number of transmit space-time streams on the first link within the first time is equal to the maximum number of transmit space-time streams on the second link within the second time. For a relationship between the first link, the first time, the second link, the second time, and the maximum number of transmit space-time streams, refer to the foregoing related descriptions of the first link, the first time, the second link, the second time, and the maximum number of receive spatial streams. Details are not described herein again.

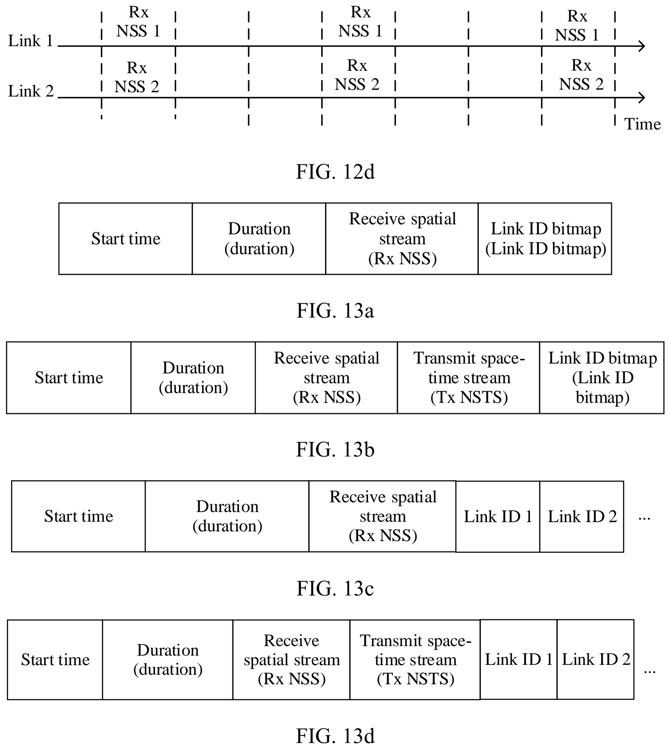

In this embodiment of this application, when the first communication frame shown in FIG. 5 includes indication information of a plurality of links (for example, two links), as shown in FIG. 12d, action times (namely, target times) of the link 1 and the link 2 in FIG. 12d are the same, and a maximum number of receive spatial streams indicated by the first NSS information corresponding to the link 1 may be the same as or different from a maximum number of receive spatial streams indicated by the second NSS information corresponding to the link 2. However, when the communication frame shown in FIG. 11 includes indication information of a plurality of links, as shown in FIG. 12a to FIG. 12c, action times (for example, the first time and the second time) of the link 1 and the link 2 (or the link 3) are different, and NSS information corresponding to the link 1 may be the same as NSS information corresponding to the link 2 (or the link 3) (a case in which the NSS information corresponding to the link 1 is the same as the NSS information corresponding to the link 2 shown herein is merely an example).

1102: The first communication apparatus transmits the communication frame, and correspondingly, the second communication apparatus receives the communication frame.

1103: The second communication apparatus parses the communication frame.

For example, the second communication apparatus may effectively learn, by parsing the communication frame, of a maximum number of receive spatial streams and/or a maximum number of transmit space-time streams that are/is on each link and that are/is indicated in the communication frame within corresponding time. In this way, within the corresponding time, the second communication apparatus may transmit data by using a number of transmit space-time streams corresponding to the maximum number of receive spatial streams, and/or receive data by using a number of receive spatial streams corresponding to the maximum number of transmit space-time streams. For specific descriptions of parsing the communication frame by the second communication apparatus, refer to the foregoing descriptions of the communication frame. Related descriptions of the communication frame are not described in detail herein again.

For example, TDMA-based coordination is established between an AP MLD 1 and an AP MLD 2, and the two MLDs each relate to three links. In an overall coordination manner of the three links, NSS information is the same, but times are different. Because time periods for adjusting a number of receive spatial streams on a plurality of links at an MLD end are aligned, the method shown in FIG. 11 may be used to simplify a signaling design, reduce signaling overheads, and reduce complexity. For example, three sets of time parameters are required when an AP separately maintains three links. The sets of time parameters may not be aligned during setting, resulting in complex radio frequency switching. In addition, radio frequency resources are wasted because no radio frequency resource is required on a link at some times, and radio frequency resources are insufficient because radio frequency resources are required on a plurality of links at some times. In this way, according to the method shown in FIG. 11, AP maintenance complexity can be effectively reduced.

In this embodiment of this application, from the perspective of a plurality of links in an MLD, when NSS parameter adjustment is performed on the plurality of links in a time-based polling mode, one communication frame may indicate both time periods and NSS information on the plurality of links. This can improve utilization of radio frequency resources, and effectively reduce signaling overheads, thereby reducing maintenance complexity.

The following describes a format of the communication frame by using examples.

The three links shown in FIG. 12a are used as an example. Times on the three links are equally divided into time slots in an alignment manner. On the link 1, the link 2, and the link 3, a number of receive spatial streams is adjusted to be less than or equal to the maximum number of receive spatial streams indicated by the NSS information (hereinafter referred to as that the number of receive spatial streams is adjusted to a number of spatial streams indicated by the NSS information). When a number of receive spatial streams on one link is adjusted to the number of spatial streams indicated by the NSS information, a number of receive spatial streams on another link is 0 (that is, there is no receiving capability) in a same time slot. For example, the format of the communication frame may be shown in FIG. 13a. The communication frame shown in FIG. 13a includes a link ID bitmap. If a bit in the link ID bitmap is set to 1, it indicates that a link corresponding to the bit participates in adjustment of the maximum number of receive spatial streams indicated by the NSS information. Alternatively, the format of the communication frame may be shown in FIG. 13c. The link ID bitmap is replaced with a link ID list. The link ID list includes a link ID 1, a link ID 2, and the like, and an ellipsis indicates that a link ID 3 is omitted. In other words, the links indicated by the link ID list in FIG. 13b participate in adjustment of the maximum number of receive spatial streams indicated by the NSS information.

For example, each time slot shown in FIG. 12a may be determined based on the start time and the duration that is indicated by the duration information. For example, within a first time slot (namely, the first time), a number of receive spatial streams on the link 1 is the number of spatial streams indicated by the NSS information, and a number of receive spatial streams on each of the link 2 and the link 3 may be 0; within a second time slot (namely, the second time), a number of receive spatial streams on the link 2 is the number of spatial streams indicated by the NSS information, and a number of receive spatial streams on each of the link 1 and the link 3 may be 0; and within a third time slot (namely, the third time), a number of receive spatial streams on the link 3 is the number of spatial streams indicated by the NSS information, and a number of receive spatial streams on each of the link 1 and the link 2 may be 0. The rest may be deduced by analogy. Within a (3k+1)^{th} time slot (k is an integer), a number of receive spatial streams on the link 1 is the number of spatial streams indicated by the NSS information, and a number of receive spatial streams on each of the link 2 and the link 3 may be 0. Examples are not enumerated herein again.

It may be understood that the three links shown in FIG. 12a are merely examples, and shall not be understood as a limitation on embodiments of this application. For example, it may be further extended that there are n Rx NSS parameters on n links (that is, each of the n links corresponds to one piece of NSS information, that is, the communication frame includes n pieces of NSS information). As time slots progress, the n parameters are polled on the n links. For example, a Rx NSS 0 may be understood as a maximum number of receive spatial streams indicated by NSS information corresponding to a link. For example, within a 0^{th} time slot, receive spatial streams on a link 1 to a link n are a Rx NSS 0, a Rx NSS 1, a Rx NSS 2, ..., and a Rx NSS (n-1) respectively; within a first time slot, receive spatial streams on the link 1 to the link n are a Rx NSS 1, a Rx NSS 2, ..., a Rx NSS (n-1), and Rx NSS 0 respectively; and the rest may be deduced by analogy. Within a time slot k, receive spatial streams on the link 1 to the link n are a Rx NSS mod (k, n), a Rx NSS mod (1+k, n), ..., and a Rx NSS mod (n-1+k, n) respectively. For another example, within a 0^{th} time slot, receive spatial streams on a link 1 to a link n are a Rx NSS 0, a Rx NSS 1, a Rx NSS 2, ..., and a Rx NSS n respectively; within a first time slot, receive spatial streams on the link 1 to the link n are an NSS (n-1), a Rx NSS 0, a Rx NSS 1, ..., and a Rx NSS (n-2) respectively; and the rest may be deduced by analogy. Within a time slot k, receive spatial streams on the link 1 to the link n are a Rx NSS mod (1-k, n), a Rx NSS mod (2-k, n), ..., and a Rx NSS mod (n-1-k, n) respectively.

It may be understood that the time slots shown herein may be understood as the times described above, such as the first time, the second time, and the third time. The rest may be deduced by analogy. The n Rx NSS parameters shown above may alternatively be understood as that a number of receive spatial streams on another link may also be 1 (a basic single-stream receiving capability is reserved) or more when a number of spatial streams on a link is less than or equal to a number of spatial streams (for example, the Rx NSS 0) indicated by NSS information, where the number of receive spatial streams on the another link may be indicated by the parameters: the Rx NSS 1, the Rx NSS 2, ..., and the Rx NSS (n-1). It may be understood that the time slot in this embodiment of this application may be counted from 0 or 1. This is not limited in embodiments of this application.

For example, for a non-AP MLD, or a Wi-Fi chip or a functional module disposed in the non-AP MLD, or the like, the communication frame may further include a transmit spatial stream field, as shown in FIG. 13b and FIG. 13d. For related descriptions of FIG. 13b and FIG. 13d, refer to FIG. 13a, FIG. 13c, FIG. 11, and the like. Details are not described herein again.

It may be understood that each time shown in embodiments of this application may also be referred to as a slot (slot). For example, the target time shown above may be referred to as a slot, the first time shown above may be referred to as a first slot, and the second time may be referred to as a second slot. Alternatively, each time shown above may also be referred to as a time period, or a time period, or the like. For example, the target time shown above may also be referred to as a target time period, the first time may be referred to as a first time period, and the second time may be referred to as a second time period. A specific name of each time shown above is not limited in embodiments of this application.

It may be understood that the first communication apparatus and the second communication apparatus may perform the related method shown in FIG. 5 or FIG. 11. When the method shown in FIG. 5 and the method shown in FIG. 11 are combined, the communication frame may include one-bit indication information. The indication information indicates a manner in which the second communication apparatus parses the communication frame. For example, when a value of the indication information is a first value, the second communication apparatus is indicated to parse the communication frame in the manner shown in FIG. 5. For another example, when a value of the indication information is a second value, the second communication apparatus is indicated to parse the communication frame in the manner shown in FIG. 11.

In a possible implementation, the NSS information or the NSS information and the NSTS information in the foregoing embodiments may be replaced with a supported MCS and NSS set (supported MCS and NSS set) field. For example, the NSS information may include the first NSS information, the second NSS information, and the like shown above. The NSTS information includes the first NSTS information, the second NSTS information, and the like shown above. With progress of the standard, the supported MCS and NSS set field may have another name in a next-generation standard. This is not limited in embodiments of this application.

For example, the supported MCS and NSS set field may include one or more MCS map fields. A number of MCS map fields may be indicated by an MCS map count control (MCS mapcountcontrol) field. Therefore, in a possible implementation, the NSS information or the NSS information and the NSTS information in the foregoing embodiments may be replaced with an MCS map count control field (or an MCS map count field) and a supported MCS and NSS set field.

For example, the MCS map count control field may include an MCS map count subfield (MCS map count subfield). For example, the MCS map count subfield indicates the number of MCS map fields. For example, if a value of the MCS map count subfield is a first value (for example, 0 as listed below), the number of MCS map fields may be N₁ (for example, 1 as listed below). For another example, if a value of the MCS map count subfield is a second value (for example, 1 as listed below), the number of MCS map fields may be N₂ (for example, 2 as listed below). For another example, if a value of the MCS map count subfield is a third value (for example, 2 as listed below), the number of MCS map fields may be N₃ (for example, 3 as listed below).

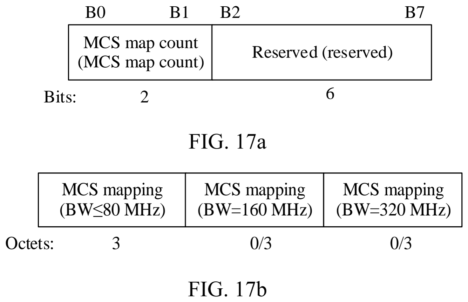

FIG. 17a is a diagram of a format of an MCS map count control field according to an embodiment of this application. For example, the MCS map count control field may include a two-bit MCS map count subfield and a six-bit reserved field. For example, the MCS map count subfield occupies two bits. For example, if a maximum supported bandwidth of a non-AP STA is less than or equal to 80 MHz, the MCS map count subfield may be set to 0. For another example, if a maximum supported bandwidth of a non-AP STA is equal to 160 MHz or 320 MHz, the MCS map count subfield may be set to 1 or 2. A value of 3 of the MCS map count subfield is reserved. For example, if a value of the MCS map count subfield is 0, it indicates that the supported MCS and NSS set field may include one piece of MCS mapping (for example, a piece of MCS mapping with a BW is less than or equal to 80 MHz). For another example, if a value of the MCS map count subfield is 1, it indicates that the supported MCS and NSS set field may include two pieces of MCS mapping (for example, a piece of MCS mapping with a BW less than or equal to 80 MHz and a piece of MCS mapping with a BW equal to 160 MHz). For another example, if a value of the MCS map count subfield is 2, it indicates that the supported MCS and NSS set field may include three pieces of MCS mapping (for example, a piece of MCS mapping with a BW less than or equal to 80 MHz, a piece of MCS mapping with a BW equal to 160 MHz, and a piece of MCS mapping with a BW equal to 320 MHz).

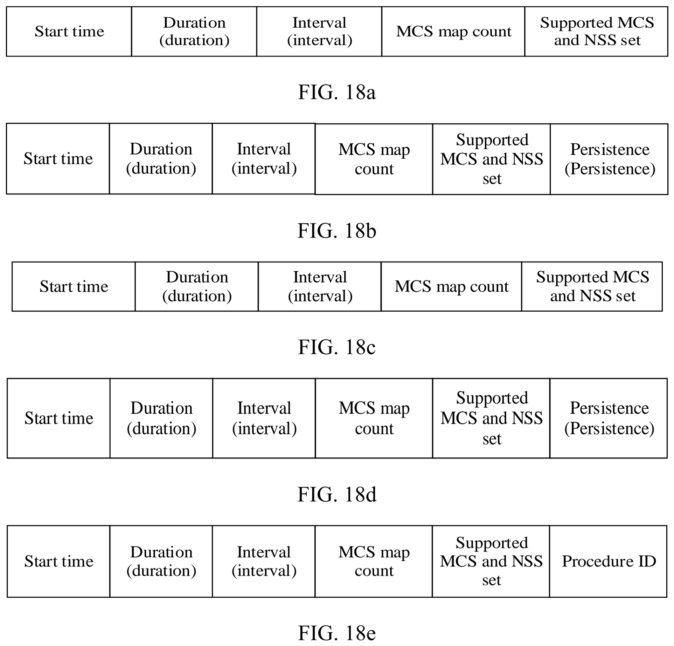

The MCS map count control field shown in FIG. 17a is merely an example. For example, in a specific implementation, the MCS map count control field may be replaced with an MCS map count field. FIG. 18a to FIG. 22d below are all described by using the MCS map count field as an example. Frame formats shown in FIG. 18a to FIG. 22d may include a two-bit MCS map count field (as shown in the figure), or include an eight-bit MCS map count control field (not shown in the figure).

FIG. 17b is a diagram of a format of a supported MCS and NSS set field according to an embodiment of this application. FIG. 17b is described by using an example in which a maximum bandwidth (BW) supported by the first communication apparatus is 320 MHz. In a specific implementation, the bandwidth may alternatively be another value. This is not limited in embodiments of this application. For example, as the bandwidth supported by the first communication apparatus is increased (for example, 640 MHz or 480 MHz), a number of MCS map fields may be increased.

For example, if the bandwidth supported by the first communication apparatus is 320 MHz, the number of MCS map fields is 3. For example, if a bandwidth used to transmit the first communication frame is 80 MHz, a maximum transmit NSS and a maximum receive NSS may be determined by using an MCS map field corresponding to a BW less than or equal to 80 MHz. For another example, if a bandwidth used to transmit the first communication frame is 160 MHz, a maximum transmit NSS and a maximum receive NSS may be determined by using an MCS map field corresponding to a BW equal to 160 MHz.

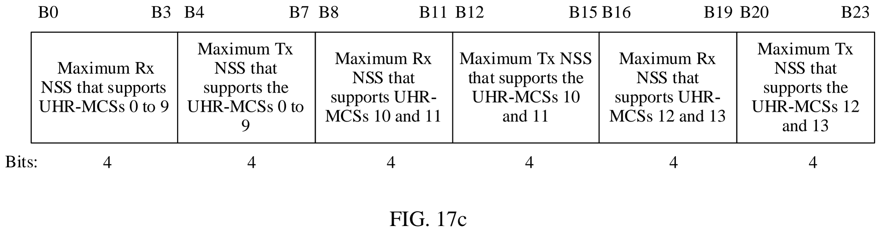

FIG. 17c is a diagram of a format of an MCS map field according to an embodiment of this application. Each piece of MCS mapping in FIG. 17b may include subfields shown in FIG. 17c. FIG. 17b shows MCS map fields corresponding to different bandwidths, and values of subfields in the MCS map fields corresponding to the different bandwidths are different.

FIG. 17c is described by using UHR as an example. With progress of the standard, there may be another type of MCS (for example, an IMMW-MCS) subsequently. This is not limited in embodiments of this application. An MCS 0 to an MCS 13 shown in FIG. 17c are merely examples. With progress of the standard, there may be more MCSs subsequently. This is not limited in embodiments of this application.

The MCS map field may indicate a correspondence between an MCS and an NSS. For example, the MCS map field includes at least one of the following: a maximum Rx NSS that supports UHR-MCSs 0 to 9 (Rx Max NSS That Supports UHR-MCS 0-9), a maximum Tx NSS that supports the UHR-MCSs 0 to 9 (Tx Max NSS That Supports UHR-MCS 0-9), a maximum Rx NSS that supports UHR-MCSs 10 and 11 (Rx Max NSS That Supports UHR-MCS 10-11), a maximum Tx NSS that supports the UHR-MCSs 10 and 11 (Tx Max NSS That Supports UHR-MCS 10-11), a maximum Rx NSS that supports UHR-MCSs 12 and 13 (Rx Max NSS That Supports UHR-MCS 12-13), or a maximum Tx NSS that supports the UHR-MCSs 12 and 13 (Tx Max NSS That Supports UHR-MCS 12-13). A relationship between a value and a meaning of each subfield may be shown in Table 1.

In a specific implementation, the MCS map field may include a part of subfields and all subfields shown in FIG. 17c. For example, the maximum Rx NSS that supports the UHR-MCSs 12 and 13 and the maximum Tx NSS that supports the UHR-MCSs 12 and 13 in the MCS map field may be set to 0, to indicate that the first communication apparatus does not support receiving of the MCSs 12 and 13 and does not support transmitting of the MCSs 12 and 13. As shown in Table 1, if a value of the maximum Rx NSS subfield that supports the UHR-MCSs 0 to 9 is 3 (for example, a corresponding maximum number of receive spatial streams is 3), and a value of the maximum Rx NSS subfield that supports the UHR-MCSs 10 and 11 is 2 (for example, a corresponding maximum number of receive spatial streams is 2), it indicates that a maximum number of receive spatial streams supported by the first communication apparatus is 3.

In this embodiment of this application, there is a correspondence between an MCS and a number of spatial streams. Therefore, when the first communication apparatus uses different MCSs, maximum numbers of spatial streams corresponding to the MCSs are different. As shown in the example, when the first communication apparatus uses the MCSs 0 to 9, the maximum number of receive spatial streams supported by the first communication apparatus is 3; and when the first communication apparatus uses the MCSs 10 and 11, the maximum number of receive spatial streams supported by the first communication apparatus is 2.

FIG. 17c shows NSSs corresponding to MCSs by using the MCSs 0 to 9, the MCSs 10 and 11, and the MCSs 12 and 13 as examples. For example, the MCSs may alternatively be divided into the MCSs 0 to 7, the MCSs 8 and 9, the MCSs 10 and 11, and the MCSs 12 and 13. For another example, MCSs corresponding to different NSSs may alternatively be set, such as an MCS that supports maximum Rx NSSs 1 and 2, an MCS that supports maximum Tx NSSs 1 and 2, an MCS that supports maximum Rx NSSs 3 and 4, and an MCS that supports maximum Tx NSSs 3 and 4. Examples are not enumerated herein.

**Table 1**

| Maximum NSS subfield value (Max NSS subfield value) | Maximum number of spatial streams that supports the specified MCS set (Maximum Number of spatial streams that supports the specified MCS set) |
|---|---|
| 0 | Not supported |
| 1 | 1 |
| 2 | 2 |
| 3 | 3 |
| 4 | 4 |
| 5 | 5 |
| 6 | 6 |
| 7 | 7 |
| 8 | 8 |
| 9 to 15 | Reserved |

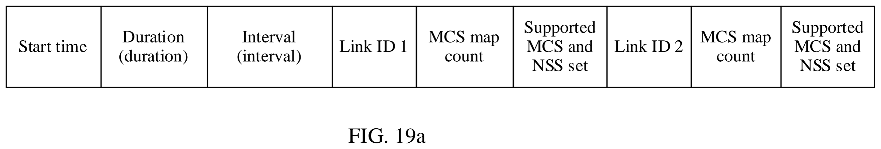

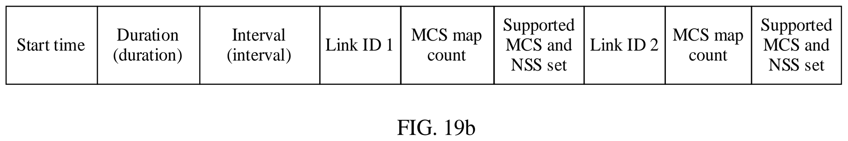

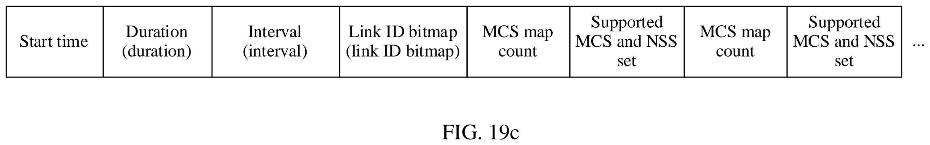

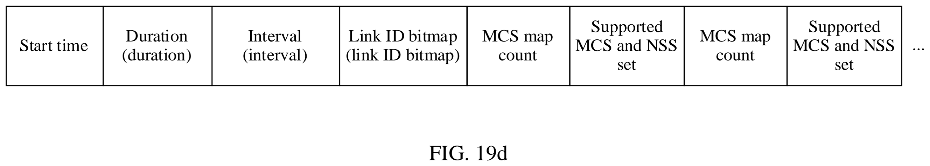

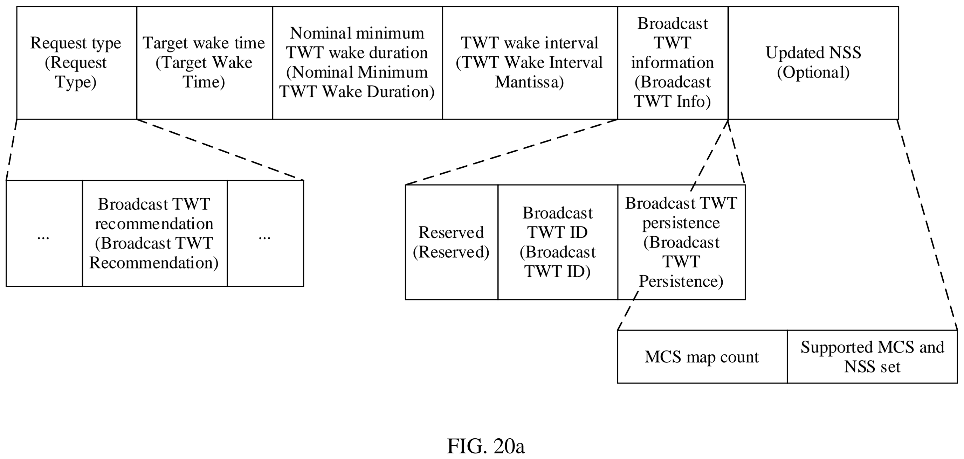

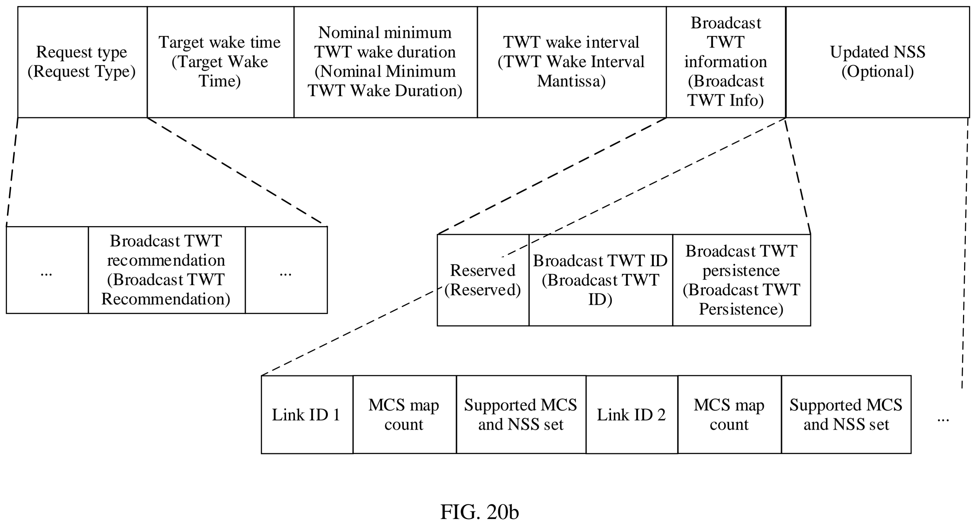

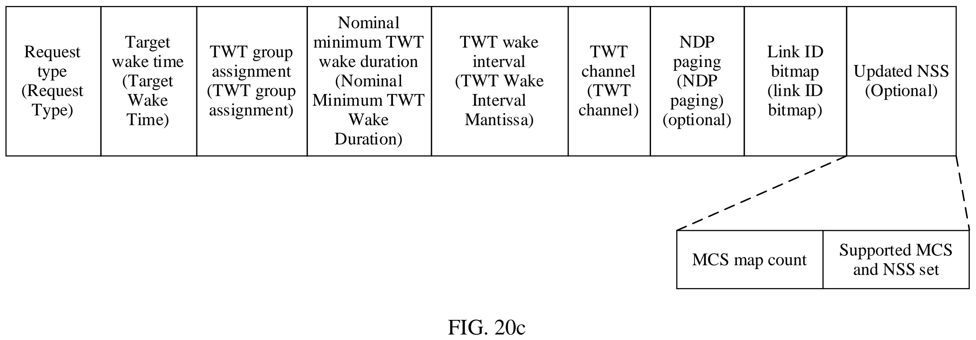

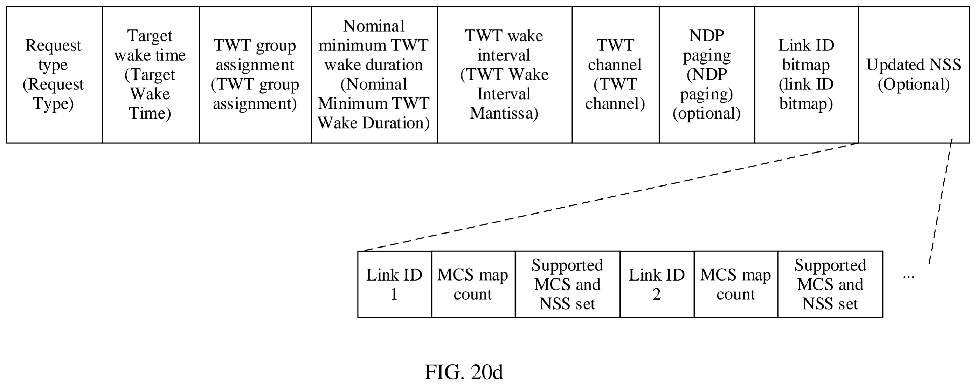

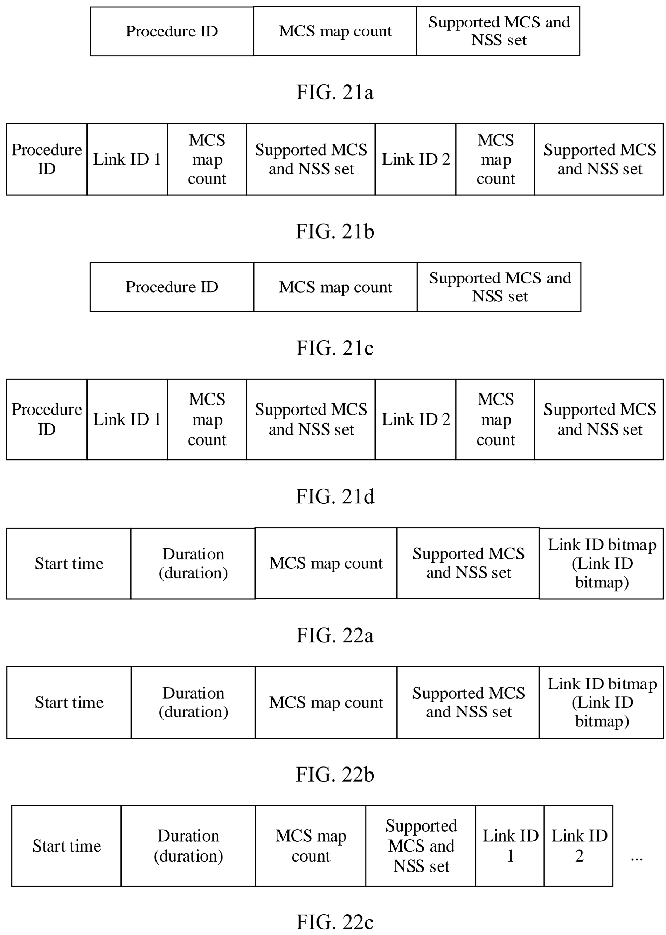

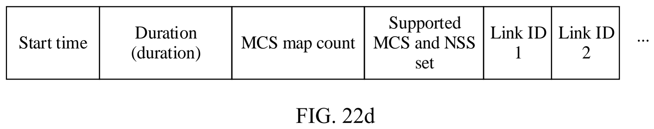

With reference to a relationship between the MCS map count field and the supported MCS and NSS set (supported MCS and NSS set) field, and the NSS information and the NSTS information, FIG. 7a to FIG. 7e may be replaced with FIG. 18a to FIG. 18e in sequence; FIG. 8a to FIG. 8d may be replaced with FIG. 19a to FIG. 19d in sequence; FIG. 9a to FIG. 9d may be replaced with FIG. 20a to FIG. 20d in sequence; FIG. 10a to FIG. 10d may be replaced with FIG. 21a to FIG. 21d in sequence; and FIG. 13a to FIG. 13d may be replaced with FIG. 22a to FIG. 22d in sequence. A sequence of the fields is not limited in embodiments of this application. For related descriptions of FIG. 18a to FIG. 22d, refer to the foregoing descriptions of FIG. 5 to FIG. 12d. Details are not described herein again.

In this embodiment of this application, because the MCS map field may include the maximum Rx NSS and/or the maximum Tx NSS, some accompanying drawings may have same content after replacement according to the foregoing relationship between the NSS information or the NSS information and the NSTS information, and the MCS map field. For ease of correspondence, these same accompanying drawings are still reserved in embodiments of this application.

Because an NSTS is related to an NSS, FIG. 18a to FIG. 18e, FIG. 19a to FIG. 19d, FIG. 20a to FIG. 20d, FIG. 21a to FIG. 21d, and FIG. 22a to FIG. 22d are described by using a number of transmit spatial streams as an example, but shall not be understood as a limitation on embodiments of this application. The maximum Tx NSS shown in FIG. 18a to FIG. 22d may alternatively be replaced with a maximum Tx NSTS.

"Field" and "subfield" are not specifically distinguished in embodiments of this application. Although the "field", the "subfield", the "elements", and the "subelements" are not specifically distinguished in embodiments shown in this application, a person skilled in the art may adaptively distinguish between relationships between the fields shown in embodiments of this application.

Communication apparatuses provided in embodiments of this application are described below.

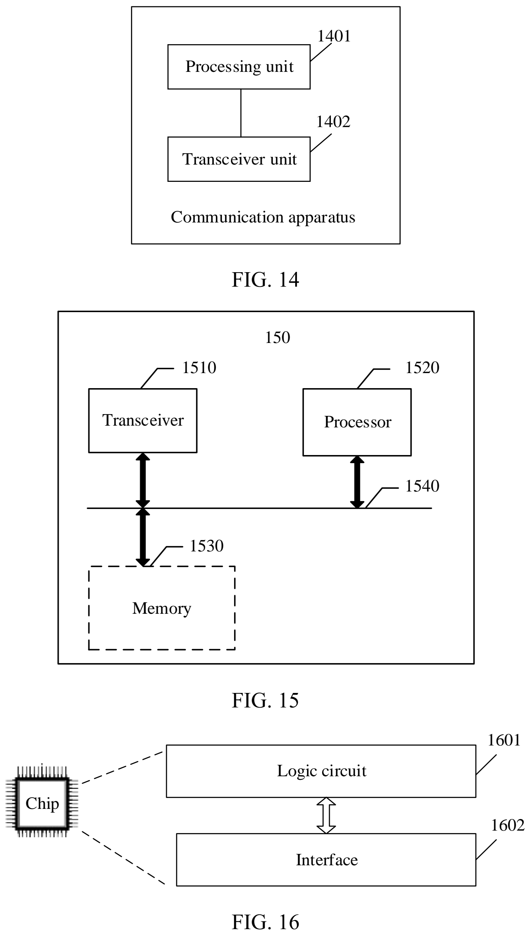

In this application, the communication apparatus is divided into functional modules based on the foregoing method embodiments. For example, each functional module may be obtained through division based on each corresponding function, or two or more functions may be integrated into one processing module. The integrated module may be implemented in a form of hardware, or may be implemented in a form of software functional module. It should be noted that, in this application, module division is an example, and is merely logical function division. During actual implementation, another division manner may be used. The following describes in detail communication apparatuses in embodiments of this application with reference to FIG. 14 to FIG. 16.

FIG. 14 is a diagram of a structure of a communication apparatus according to an embodiment of this application. As shown in FIG. 14, the communication apparatus includes a processing unit 1401 and a transceiver unit 1402. The transceiver unit 1402 may implement a corresponding communication function, and the processing unit 1401 is configured to process data. For example, the transceiver unit 1402 may also be referred to as a communication interface, a communication unit, or the like.

In some embodiments of this application, the communication apparatus may be configured to perform actions performed by the first communication apparatus in the foregoing method embodiments. In this case, the communication apparatus may be a WLAN device, or a chip or a functional module configured in the WLAN device, or the like. The transceiver unit 1402 is configured to perform a receiving/transmitting-related operation of the first communication apparatus in the foregoing method embodiments, and the processing unit 1401 is configured to perform a processing-related operation of the first communication apparatus in the foregoing method embodiments.

For example, the processing unit 1401 is configured to generate a first communication frame; and the transceiver unit 1402 is configured to transmit or output the first communication frame.

It may be understood that the transceiver unit 1402 may transmit the first communication frame to another communication apparatus, or the transceiver unit 1402 outputs the first communication frame from the processing unit 1401 to another component or another functional module in the first communication apparatus. Related descriptions of outputting other information by the transceiver unit are similar. Details are not described below again.

For example, the transceiver unit 1402 is configured to input or receive a second communication frame. The processing unit 1401 is further configured to parse the second communication frame, to obtain a maximum number of receive spatial streams and/or a maximum number of transmit space-time streams of a second communication apparatus within a target time.

In some other embodiments of this application, the communication apparatus may be configured to perform actions performed by the second communication apparatus in the foregoing method embodiments. In this case, the communication apparatus may be a WLAN device, or a chip or a functional module configured in the WLAN device, or the like. The transceiver unit 1402 is configured to perform a receiving/transmitting-related operation of the second communication apparatus in the foregoing method embodiments, and the processing unit 1401 is configured to perform a processing-related operation of the second communication apparatus in the foregoing method embodiments.

The transceiver unit 1402 is configured to receive or input a first communication frame. The processing unit 1401 is configured to parse the first communication frame, to obtain a maximum number of receive spatial streams and/or a maximum number of transmit space-time streams of a first communication apparatus within a target time.

For example, the transceiver unit 1402 is configured to output or transmit a second communication frame.

Optionally, the communication apparatus may further include a storage unit. The storage unit may be configured to store instructions and/or data. The processing unit 1401 may read the instructions and/or the data in the storage unit, so that the communication apparatus implements the foregoing method embodiments. For example, the storage unit may be configured to store duration information, interval information, information indicating total persistence, information indicating a start time, and the like.

In the foregoing embodiments, for descriptions of the first communication frame, first NSS information, first NSTS information, indication information of a link, second NSS information, second NSTS information, the second communication frame, a supported MCS and NSS set field, an MCS map count control field, an MCS map count field, and the like, refer to the descriptions in the foregoing method embodiments. Details are not described herein again.

In some embodiments of this application, the communication apparatus may be configured to perform actions performed by the first communication apparatus in the foregoing method embodiments. In this case, the communication apparatus may be a WLAN device, or a chip or a functional module configured in the WLAN device, or the like. The transceiver unit 1402 is configured to perform a receiving/transmitting-related operation of the first communication apparatus in the foregoing method embodiments, and the processing unit 1401 is configured to perform a processing-related operation of the first communication apparatus in the foregoing method embodiments.

For example, the processing unit 1401 is configured to generate a communication frame; and the transceiver unit 1402 is configured to transmit or output the communication frame.

In some other embodiments of this application, the communication apparatus may be configured to perform actions performed by the second communication apparatus in the foregoing method embodiments. In this case, the communication apparatus may be a WLAN device, or a chip or a functional module configured in the WLAN device, or the like. The transceiver unit 1402 is configured to perform a receiving/transmitting-related operation of the second communication apparatus in the foregoing method embodiments, and the processing unit 1401 is configured to perform a processing-related operation of the second communication apparatus in the foregoing method embodiments.

The transceiver unit 1402 is configured to receive or input a communication frame. The processing unit 1401 is configured to parse the communication frame, to obtain a maximum number of receive spatial streams and/or a maximum number of transmit space-time streams of a first communication apparatus within a target time.

Optionally, the communication apparatus may further include a storage unit. The storage unit may be configured to store instructions and/or data. The processing unit 1401 may read the instructions and/or the data in the storage unit, so that the communication apparatus implements the foregoing method embodiments. For example, the storage unit may be configured to store duration information, information indicating total persistence, information indicating a start time, and the like.

In the foregoing embodiments, for descriptions of the communication frame, NSS information, NSTS information, indication information of a link, a supported MCS and NSS set field, an MCS map count control field, an MCS map count field, and the like, refer to the descriptions in the foregoing method embodiments. Details are not described herein again.

It may be understood that specific descriptions of the transceiver unit and the processing unit in the foregoing embodiments are merely examples. For specific functions, steps, or the like performed by the transceiver unit and the processing unit, refer to the foregoing method embodiments. Details are not described herein again.

The foregoing describes the communication apparatus in this embodiment of this application. The following describes possible product forms of the communication apparatus. It should be understood that a product in any form having the functions of the communication apparatus described in FIG. 14 falls within the protection scope of embodiments of this application. It should be further understood that the following descriptions are merely examples, and the product form of the communication apparatus in this embodiment of this application is not limited thereto.

In a possible implementation, in the communication apparatus shown in FIG. 14, the processing unit 1401 may be one or more processors, and the transceiver unit 1402 may be a transceiver. Alternatively, the transceiver unit 1402 may be a transmitting unit and a receiving unit, where the transmitting unit may be a transmitter, the receiving unit may be a receiver, and the transmitting unit and the receiving unit are integrated into one component, for example, a transceiver. In this embodiment of this application, the processor and the transceiver may be coupled, or the like. A manner of a connection between the processor and the transceiver is not limited in embodiments of this application. In a process of performing the foregoing method, a process of transmitting information in the foregoing method may be understood as a process of outputting the information by the processor. When outputting the information, the processor outputs the information to the transceiver, so that the transceiver transmits the information. After the information is outputted by the processor, other processing may further need to be performed on the information before the information arrives at the transceiver. Similarly, a process of receiving information in the foregoing method may be understood as a process of receiving the input information by the processor. When the processor receives the input information, the transceiver receives the information, and inputs the information to the processor. Further, after the transceiver receives the information, other processing may need to be performed on the information, and then processed information is input into the processor.

As shown in FIG. 15, a communication apparatus 150 includes one or more processors 1520 and a transceiver 1510.

In some embodiments of this application, the communication apparatus may be configured to perform the steps, the functions, or the like performed by the first communication apparatus in the foregoing method embodiments.

For example, the processor 1520 is configured to generate a first communication frame; and the transceiver 1510 is configured to transmit the first communication frame.

For example, the transceiver 1510 is configured to receive a second communication frame; and the processor 1520 is further configured to parse the second communication frame.

In some other embodiments of this application, the communication apparatus may be configured to perform the steps, the functions, or the like performed by the second communication apparatus in the foregoing method embodiments.

The transceiver 1510 is configured to receive a first communication frame. The processor 1520 is configured to parse the first communication frame, to obtain a maximum number of receive spatial streams and/or a maximum number of transmit space-time streams of a first communication apparatus within a target time.

For example, the transceiver 1510 is configured to transmit a second communication frame.

In some embodiments of this application, the communication apparatus may be configured to perform the steps, the functions, or the like performed by the first communication apparatus in the foregoing method embodiments.

For example, the processor 1520 is configured to generate a communication frame; and the transceiver 1510 is configured to transmit the communication frame.

In some other embodiments of this application, the communication apparatus may be configured to perform the steps, the functions, or the like performed by the second communication apparatus in the foregoing method embodiments.

The transceiver 1510 is configured to receive a communication frame. The processor 1520 is configured to parse the communication frame, to obtain a maximum number of receive spatial streams and/or a maximum number of transmit space-time streams of a first communication apparatus within a target time. Specific descriptions of the transceiver and the processor in the foregoing embodiments are merely examples. For specific functions, steps, or the like performed by the transceiver and the processor, refer to the foregoing method embodiments. Details are not described herein again.

In various implementations of the communication apparatus shown in FIG. 15, the transceiver may include a receiver and a transmitter. The receiver is configured to perform a receiving function (or operation). The transmitter is configured to perform a transmitting function (or operation). The transceiver is configured to communicate with another device/apparatus through a transmission medium.

Optionally, the communication apparatus 150 may further include one or more memories 1530, configured to store program instructions, data, and/or the like. The memory 1530 is coupled to the processor 1520. The coupling in embodiments of this application may be an indirect coupling or a communication connection between apparatuses, units, or modules in an electrical form, a mechanical form, or another form, and is used for information exchange between the apparatuses, the units, or the modules. The processor 1520 may cooperate with the memory 1530. The processor 1520 may execute the program instructions stored in the memory 1530. Optionally, at least one of the one or more memories may be included in the processor. For example, the memory may be configured to store at least one of duration information, interval information, information indicating total persistence, or information indicating a start time.

A specific connection medium between the transceiver 1510, the processor 1520, and the memory 1530 is not limited in embodiments of this application. In this embodiment of this application, in FIG. 15, the memory 1530, the processor 1520, and the transceiver 1510 are connected through a bus 1540. The bus is represented by a thick line in FIG. 15. A connection manner between other components is merely an example for description, and does not constitute a limitation. The bus may be classified into an address bus, a data bus, a control bus, and the like. For ease of representation, only one thick line indicates the bus in FIG. 15, but this does not mean that there is only one bus or only one type of bus.

In this embodiment of this application, the processor may be a general-purpose processor, a digital signal processor, an application-specific integrated circuit, a field programmable gate array or another programmable logic device, a discrete gate or a transistor logic device, a discrete hardware component, or the like. The processor can implement or execute the methods, the steps, and the logical block diagrams disclosed in embodiments of this application. The general-purpose processor may be a microprocessor, any conventional processor, or the like. The steps in the methods disclosed with reference to embodiments of this application may be directly performed by a hardware processor, or may be performed by a combination of hardware and software modules in the processor, or the like.

In this embodiment of this application, the memory may include but is not limited to a nonvolatile memory like a hard disk drive (hard disk drive, HDD) or a solid-state drive (solid-state drive, SSD), a random access memory (Random Access Memory, RAM), an erasable programmable read-only memory (Erasable Programmable ROM, EPROM), a read-only memory (Read-Only Memory, ROM), a compact disc read-only memory (Compact Disc Read-Only Memory, CD-ROM), or the like. The memory is any storage medium that can be used to carry or store program code in a form of an instruction or a data structure and that can be read and/or written by a computer (for example, the communication apparatus shown in this application), but is not limited thereto. The memory in embodiments of this application may alternatively be a circuit or any other apparatus that can implement a storage function, and is configured to store the program instructions and/or the data.

For example, the processor 1520 is mainly configured to: process a communication protocol and communication data, control the entire communication apparatus, execute a software program, and process data of the software program. The memory 1530 is mainly configured to store the software program and data. The transceiver 1510 may include a control circuit and an antenna. The control circuit is mainly configured to: perform conversion between a baseband signal and a radio frequency signal, and process the radio frequency signal. The antenna is mainly configured to receive and transmit a radio frequency signal in a form of electromagnetic wave. An input/output apparatus like a touchscreen, a display, or a keyboard, is mainly configured to: receive data input by a user, and output data to the user.

After the communication apparatus is powered on, the processor 1520 may read the software program in the memory 1530, interpret and execute instructions of the software program, and process data of the software program. When data needs to be transmitted in a wireless manner, the processor 1520 performs baseband processing on the to-be-transmitted data, and then outputs a baseband signal to a radio frequency circuit. The radio frequency circuit performs radio frequency processing on the baseband signal, and then transmits a radio frequency signal in a form of electromagnetic wave through the antenna. When data is transmitted to the communication apparatus, the radio frequency circuit receives a radio frequency signal through the antenna, converts the radio frequency signal into a baseband signal, and outputs the baseband signal to the processor 1520. The processor 1520 converts the baseband signal into data, and processes the data.

In another implementation, the radio frequency circuit and the antenna may be disposed independent of the processor that performs baseband processing. For example, in a distributed scenario, the radio frequency circuit and the antenna may be remotely disposed independent of the communication apparatus.

It may be understood that the communication apparatus shown in this embodiment of this application may alternatively include more components than those shown in FIG. 15, or the like. This is not limited in embodiments of this application. The methods performed by the processor and the transceiver are merely examples. For specific steps performed by the processor and the transceiver, refer to the methods described above.

In another possible implementation, in the communication apparatus shown in FIG. 14, the processing unit 1401 may be one or more logic circuits. The transceiver unit 1402 may be an input/output interface that is also referred to as a communication interface, an interface circuit, an interface, or the like. Alternatively, the transceiver unit 1402 may be a transmitting unit and a receiving unit. The transmitting unit may be an output interface, and the receiving unit may be an input interface. The transmitting unit and the receiving unit are integrated into one unit, for example, an input/output interface. As shown in FIG. 16, a communication apparatus shown in FIG. 16 includes a logic circuit 1601 and an interface 1602. That is, the processing unit 1401 may be implemented by using the logic circuit 1601, and the transceiver unit 1402 may be implemented by using the interface 1602. The logic circuit 1601 may be a chip, a processing circuit, an integrated circuit, a system on chip (system on chip, SoC) chip, or the like. The interface 1602 may be a communication interface, an input/output interface, a pin, or the like. For example, FIG. 16 shows an example in which the communication apparatus is a chip. The chip includes the logic circuit 1601 and the interface 1602. It may be understood that the chip shown in embodiments of this application may include a narrowband chip, an ultra-bandwidth chip, or the like. This is not limited in embodiments of this application. The step of transmitting the sensing packet shown above may be performed by the ultra-bandwidth chip, and whether the remaining steps are performed by the ultra-bandwidth chip is not limited in embodiments of this application.

In this embodiment of this application, the logic circuit and the interface may be coupled to each other. A specific manner of a connection between the logic circuit and the interface is not limited in embodiments of this application.

In some embodiments of this application, the communication apparatus may be configured to perform the steps, the functions, or the like performed by the first communication apparatus in the foregoing method embodiments.

For example, the logic circuit 1601 is configured to generate a first communication frame; and the interface 1602 is configured to output the first communication frame.

For example, the interface 1602 is configured to input a second communication frame; and the logic circuit 1601 is configured to parse the second communication frame.

In some other embodiments of this application, the communication apparatus may be configured to perform the steps, the functions, or the like performed by the second communication apparatus in the foregoing method embodiments.

The interface 1602 is configured to input a first communication frame; and the logic circuit 1601 is configured to parse the first communication frame.

For example, the interface 1602 is configured to output a second communication frame.

In some embodiments of this application, the communication apparatus may be configured to perform the steps, the functions, or the like performed by the first communication apparatus in the foregoing method embodiments.

For example, the logic circuit 1601 is configured to generate a communication frame; and the interface 1602 is configured to output the communication frame.

In some other embodiments of this application, the communication apparatus may be configured to perform the steps, the functions, or the like performed by the second communication apparatus in the foregoing method embodiments.

The interface 1602 is configured to input a communication frame; and the logic circuit 1601 is configured to parse the communication frame.

Specific descriptions of the logic circuit and the interface in the foregoing embodiments are merely examples. For specific functions, steps, or the like performed by the logic circuit and the interface, refer to the foregoing method embodiments. Details are not described herein again.

For example, the chip may further include a memory. The memory may be configured to store at least one of duration information, interval information, information indicating total persistence, or information indicating a start time.

It may be understood that the communication apparatus shown in this embodiment of this application may implement the methods provided in embodiments of this application in a form of hardware, or may implement the methods provided in embodiments of this application in a form of software. This is not limited in embodiments of this application.

An embodiment of this application further provides a communication system. The communication system includes a first communication apparatus and a second communication apparatus. For descriptions of the first communication apparatus and the second communication apparatus, refer to the foregoing descriptions.

In addition, this application further provides a computer program. The computer program is used to implement operations and/or processing performed by the first communication apparatus in the methods provided in this application.

This application further provides a computer program. The computer program is used to implement operations and/or processing performed by the second communication apparatus in the method provided in this application.

This application further provides a computer-readable storage medium. The computer-readable storage medium stores computer code. When the computer code is run on a computer, the computer is enabled to perform operations and/or processing performed by the first communication apparatus in the methods provided in this application.

This application further provides a computer-readable storage medium. The computer-readable storage medium stores computer code. When the computer code is run on a computer, the computer is enabled to perform operations and/or processing performed by the second communication apparatus in the methods provided in this application.

This application further provides a computer program product. The computer program product includes computer code or a computer program. When the computer code or the computer program is run on a computer, operations and/or processing performed by the first communication apparatus in the methods provided in this application are/is performed.

This application further provides a computer program product. The computer program product includes computer code or a computer program. When the computer code or the computer program is run on a computer, operations and/or processing performed by the second communication apparatus in the method provided in this application are/is performed.

In several embodiments provided in this application, it should be understood that the disclosed system, apparatuses, and methods may be implemented in other manners. For example, the described apparatus embodiments are merely examples. For example, division into the units is merely logical function division and may be other division during actual implementation. For example, a plurality of units or components may be combined or integrated into another system, or some features may be ignored or may not be performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located at one position, or may be distributed on a plurality of network units. Some or all of the units may be selected based on an actual requirement to implement technical effect of the solutions provided in embodiments of this application.

In addition, functional units in embodiments of this application may be integrated into one processing unit, or each of the units may exist alone physically, or two or more units may be integrated into one unit. The integrated unit may be implemented in a form of hardware, or may be implemented in a form of software functional unit.

When the integrated unit is implemented in the form of software functional unit and sold or used as an independent product, the integrated unit may be stored in a computer-readable storage medium. Based on such an understanding, the technical solutions of this application essentially, or the part contributing to the conventional technologies, or all or some of the technical solutions may be implemented in a form of software product. The computer software product is stored in a readable storage medium and includes several instructions for instructing a computer device (which may be a personal computer, a server, a network device, or the like) to perform all or some of the steps in the methods described in embodiments of this application. The readable storage medium includes any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, wherein the method is applied to a first communication apparatus, and the method comprises:
generating a first communication frame, wherein the first communication frame comprises duration information and first number of spatial streams NSS information, the duration information indicates duration of a target time, and the first NSS information indicates a maximum number of receive spatial streams of the first communication apparatus within the target time; and
transmitting the first communication frame.

2. A communication method, wherein the method is applied to a second communication apparatus, and the method comprises:
receiving a first communication frame, wherein the first communication frame comprises duration information and first number of spatial streams NSS information, the duration information indicates duration of a target time, and the first NSS information indicates a maximum number of receive spatial streams of a first communication apparatus within the target time; and
parsing the first communication frame.

3. The method according to claim 1 or 2, wherein the first communication frame further comprises interval information, and the interval information indicates an interval between start times of two adjacent target times in at least two target times.

4. The method according to any one of claims 1 to 3, wherein the first communication frame further comprises at least one of the following: information indicating a start time or information indicating total persistence.

5. The method according to any one of claims 1 to 4, wherein the first communication frame further comprises indication information of a first link, and the first link corresponds to the first NSS information.

6. The method according to claim 5, wherein the first communication frame further comprises indication information of a second link and second NSS information corresponding to the second link, and the second NSS information indicates a maximum number of receive spatial streams on the second link in the first communication apparatus within the target time.

7. The method according to any one of claims 1 to 6, wherein the first communication frame further comprises a procedure identifier, and the procedure identifier corresponds to the duration information and the first NSS information.

8. The method according to any one of claims 1 to 7, wherein when the first communication apparatus is a non-access point station non-AP STA, the first communication frame further comprises first number of space-time streams NSTS information, and the first NSTS information indicates a maximum number of transmit space-time streams of the non-AP STA within the target time.

9. The method according to claim 8, wherein the first communication frame further comprises indication information of a second link and second NSTS information corresponding to the second link, and the second NSTS information indicates a maximum number of transmit space-time streams on the second link in the first communication apparatus within the target time.

10. The method according to any one of claims 1 and 3 to 9, wherein the method further comprises:
receiving a second communication frame, wherein the second communication frame comprises third NSS information or third NSTS information, the third NSS information indicates a maximum number of receive spatial streams of a second communication apparatus within the target time, and the third NSTS information indicates a maximum number of transmit space-time streams of the second communication apparatus within the target time.

11. The method according to any one of claims 2 to 9, wherein the method further comprises:
transmitting a second communication frame, wherein the second communication frame comprises third NSS information or third NSTS information, the third NSS information indicates a maximum number of receive spatial streams of the second communication apparatus within the target time, and the third NSTS information indicates a maximum number of transmit space-time streams of the second communication apparatus within the target time.

12. The method according to claim 10 or 11, wherein the second communication frame further comprises a procedure identifier.

13. The method according to any one of claims 1 to 12, wherein the maximum number of receive spatial streams indicated by the first NSS information is greater than a maximum number of receive spatial streams indicated by an extremely high throughput EHT capability element, or is greater than a maximum number of receive spatial streams indicated by an ultra high reliability UHR capability element.

14. The method according to any one of claims 1 to 13, wherein the duration information and the first NSS information are comprised in a target wake time TWT element in the first communication frame.

15. The method according to any one of claims 1 to 14, wherein
when the first communication apparatus is an access point AP, the communication frame is any one of the following: a protected ultra high reliability UHR action frame, a beacon frame, and an association response frame; or
when the first communication apparatus is a non-access point station non-AP STA, the first communication frame is any one of the following: a protected ultra high reliability UHR action frame, an association request frame, and a target wake time TWT request frame.

16. A communication method, wherein the method is applied to a first communication apparatus, and the method comprises:
generating a first communication frame, wherein the first communication frame comprises duration information and a supported modulation and coding scheme MCS and number of spatial streams NSS set field, the duration information indicates duration of a target time, and the supported MCS and NSS set field indicates a maximum receive NSS and/or a maximum transmit NSS that correspond/corresponds to an MCS within the target time; and
transmitting the first communication frame.

17. A communication method, wherein the method is applied to a second communication apparatus, and the method comprises:
receiving a first communication frame, wherein the first communication frame comprises duration information and a supported modulation and coding scheme MCS and number of spatial streams NSS set field, the duration information indicates duration of a target time, and the supported MCS and NSS set field indicates a maximum receive NSS and/or a maximum transmit NSS that correspond/corresponds to an MCS within the target time; and
parsing the first communication frame.

18. The method according to claim 16 or 17, wherein the supported MCS and NSS set field comprises one or more MCS map fields, and a number of MCS map fields corresponds to a bandwidth supported by the first communication apparatus.

19. The method according to claim 18, wherein the MCS map field indicates a maximum number of receive spatial streams and/or a maximum number of transmit spatial streams that correspond/corresponds to different MCSs within the target time.

20. The method according to claim 19, wherein the MCS map field comprises at least one of the following:
a maximum number of receive spatial streams that supports MCSs 0 to 9, a maximum number of transmit spatial streams that supports the MCSs 0 to 9, a maximum number of receive spatial streams that supports MCSs 10 and 11, a maximum number of transmit spatial streams that supports the MCSs 10 and 11, a maximum number of receive spatial streams that supports MCSs 12 and 13, or a maximum number of transmit spatial streams that supports the MCSs 12 and 13.

21. The method according to any one of claims 16 to 20, wherein the first communication frame further comprises an MCS map count field, and the MCS map count field indicates the number of MCS map fields.

22. The method according to any one of claims 16 to 21, wherein the first communication frame further comprises interval information, and the interval information indicates an interval between start times of two adjacent target times in at least two target times.

23. The method according to any one of claims 16 to 22, wherein the first communication frame further comprises at least one of the following: information indicating a start time or information indicating total persistence.

24. The method according to any one of claims 16 to 23, wherein the first communication frame further comprises indication information of a first link, and the first link corresponds to a supported MCS and NSS set field.

25. The method according to claim 24, wherein the first communication frame further comprises indication information of a second link and a supported MCS and NSS set field corresponding to the second link, and the supported MCS and NSS set field corresponding to the second link indicates a maximum receive NSS and/or a maximum transmit NSS on the second link in the first communication apparatus within the target time.

26. The method according to any one of claims 16 to 25, wherein the first communication frame further comprises a procedure identifier, and the procedure identifier corresponds to the duration information and the supported MCS and NSS set field.

27. The method according to any one of claims 16 and 18 to 26, wherein the method further comprises:
receiving a second communication frame, wherein the second communication frame comprises a supported MCS and NSS set field, and the supported MCS and NSS set field indicates a maximum receive NSS and/or a maximum transmit NSS of the second communication apparatus within the target time.

28. The method according to any one of claims 17 to 26, wherein the method further comprises:
transmitting a second communication frame, wherein the second communication frame comprises a supported MCS and NSS set field, and the supported MCS and NSS set field indicates a maximum receive NSS and/or a maximum transmit NSS of the second communication apparatus within the target time.

29. The method according to claim 27 or 28, wherein the second communication frame further comprises a procedure identifier.

30. The method according to any one of claims 16 to 29, wherein the maximum number of receive spatial streams indicated by the first field is greater than a maximum number of receive spatial streams indicated by an extremely high throughput EHT capability element, or is greater than a maximum number of receive spatial streams indicated by an ultra high reliability UHR capability element.

31. The method according to any one of claims 16 to 30, wherein the duration information and the supported MCS and NSS set field are comprised in a target wake time TWT element in the first communication frame.

32. The method according to any one of claims 16 to 31, wherein
when the first communication apparatus is an access point AP, the communication frame is any one of the following: a protected ultra high reliability UHR action frame, a beacon frame, and an association response frame; or
when the first communication apparatus is a non-access point station non-AP STA, the first communication frame is any one of the following: a protected ultra high reliability UHR action frame, an association request frame, and a target wake time TWT request frame.

33. A communication apparatus, comprising a unit configured to perform the method according to any one of claims 1 to 32.

34. A communication apparatus, comprising a processor and a memory, wherein
the memory is configured to store instructions; and
the processor is configured to execute the instructions, to enable the method according to any one of claims 1 to 32 to be performed.

35. A communication apparatus, comprising a logic circuit and an interface, wherein the logic circuit is coupled to the interface, the interface is configured to input and/or output code instructions, and the logic circuit is configured to execute the code instructions, to enable the method according to any one of claims 1 to 32 to be performed.

36. A computer-readable storage medium, wherein the computer-readable storage medium is configured to store a computer program, and when the computer program is executed, the method according to any one of claims 1 to 32 is performed.

37. A communication system, wherein the communication system comprises a first communication apparatus and a second communication apparatus, the first communication apparatus is configured to perform the method according to any one of claims 1, 3 to 10, 12 to 16, 18 to 27, and 29 to 32, and the second communication apparatus is configured to perform the method according to any one of claims 2 to 9, 11 to 15, 17 to 26, and 28 to 32.
